# EUROPEAN PATENT APPLICATION

(11) **EP 3 952 583 A1**
(43) Date of publication of application: **09.02.2022**
(21) Application number: 20784447.3
(22) Date of filing: 27.03.2020
(51) Int. Cl.: H04W 74/08

(54) **MAPPING METHOD, TERMINAL DEVICE, AND NETWORK-SIDE DEVICE**

(30) Priority: 29.03.2019 CN 201910253397
(71) Applicant: VIVO MOBILE COMMUNICATION CO., LTD., Dongguan, Guangdong 523860 (CN)
(72) Inventor: CHEN, Xiaohang, Dongguan, Guangdong 523860 (CN); SUN, Peng, Dongguan, Guangdong 523860 (CN); SHEN, Xiaodong, Dongguan, Guangdong 523860 (CN)
(74) Representative: Lavoix
(86) International application number: PCT/CN2020/081680
(87) International publication number: WO 2020/200091

(57) **Abstract**

This disclosure provides a mapping method, a terminal device, and a network-side device. The method includes: transmitting a random access message based on a target mapping relationship between physical uplink shared channel PUSCH resources and synchronization signal block SSB-related resources, where the target mapping relationship is determined according to a preset mapping rule.

## Description

### CROSS-REFERENCE TO RELATED APPLICATIONS

This application claims priority to Chinese Patent Application No. 201910253397.8, filed in China on March 29, 2019, which is incorporated herein by reference in its entirety.

### TECHNICAL FIELD

This disclosure relates to the field of communications technologies, and in particular, to a mapping method, a terminal device, and a network-side device.

### BACKGROUND

A fifth-generation (5th Generation, 5G) mobile communications system, or referred to as a new radio (New Radio, NR) system, needs to adapt to diverse use cases and service requirements. Main use cases of the NR system include enhanced mobile broadband (enhanced Mobile Broadband, eMBB) communications, massive machine type communications (massive Machine Type Communications, mMTC), and ultra-reliable and low latency communications (Ultra-Reliable and Low Latency Communications, URLLC). These use cases impose requirements such as high reliability, low latency, high bandwidth, and wide coverage on the system. To reduce overheads of downlink control signaling for a periodic service with a fixed packet size, a network device may continuously allocate some resources in a semi-persistent scheduling manner for transmission of the periodic service.

In an uplink transmission mode, if a terminal needs to transmit uplink data, the terminal first needs to achieve uplink timing synchronization through a random access procedure, that is, to obtain uplink timing advance (Timing Advance, TA) information from a network device. After achieving uplink synchronization, the terminal may transmit uplink data through dynamic scheduling or semi-persistent scheduling. When an uplink data packet is relatively small, the terminal may transmit uplink data in an out-of-synchronization state to reduce resource and power consumption.

In the random access procedure such as a contention-based random access procedure or a non-contention-based random access procedure, the terminal is also in the out-of-synchronization state when transmitting preamble (Preamble), and a cyclic prefix (Cyclic prefix, CP) needs to be added to the preamble to offset impact of a transmission delay. There is a guard (Guard) interval between different terminals to reduce interference.

When the terminal transmits uplink data in the out-of-synchronization state, for example, when the terminal transmits a physical uplink shared channel (Physical Uplink Shared Channel, PUSCH) in an out-of-synchronization state, in a non-contention-based random access procedure, that is, on a 2-step (2-step) physical random access channel (Physical Random Access Channel, PRACH), the terminal transmits a random access message carrying the PUSCH, or referred to as message A (Message A, msgA), when initiating random access. In this case, the msgA received by the network device corresponds to both the PRACH and the PUSCH, and the network device needs to perform blind detection on all possible PRACH and PUSCH occasions, resulting in high processing complexity.

### SUMMARY

Some embodiments of this disclosure provide a mapping method, a terminal device, and a network-side device, to resolve a problem in a related technology that processing complexity of a network device is high in a random access procedure.

To resolve the foregoing technical problem, this disclosure is implemented as follows:
According to a first aspect, some embodiments of this disclosure provide a mapping method, applied to a terminal device. The method includes:
   transmitting a random access message based on a target mapping relationship between physical uplink shared channel PUSCH resources and synchronization signal block SSB-related resources, where
   the target mapping relationship is determined according to a preset mapping rule.
According to a second aspect, some embodiments of this disclosure further provide a mapping method, applied to a network-side device. The method includes:
   receiving a random access message based on a target mapping relationship between physical uplink shared channel PUSCH resources and synchronization signal block SSB-related resources, where
   the target mapping relationship is determined according to a preset mapping rule.
According to a third aspect, some embodiments of this disclosure further provide a terminal device. The terminal device includes:
   a transmitting module, configured to transmit a random access message based on a target mapping relationship between physical uplink shared channel PUSCH resources and synchronization signal block SSB-related resources, where
   the target mapping relationship is determined according to a preset mapping rule.
According to a fourth aspect, some embodiments of this disclosure further provide a network-side device. The network-side device includes:
   a receiving module, configured to receive a random access message based on a target mapping relationship between physical uplink shared channel PUSCH resources and synchronization signal block SSB-related resources, where
   the target mapping relationship is determined according to a preset mapping rule.
According to a fifth aspect, some embodiments of this disclosure further provide a terminal device, including a processor, a memory, and a computer program stored in the memory and capable of running on the processor. When the computer program is executed by the processor, the steps of the mapping method provided in the first aspect are implemented.
According to a sixth aspect, some embodiments of this disclosure further provide a network-side device, including a processor, a memory, and a computer program stored in the memory and capable of running on the processor. When the computer program is executed by the processor, the steps of the mapping method provided in the second aspect are implemented.
According to a seventh aspect, some embodiments of this disclosure further provide a computer-readable storage medium. The computer-readable storage medium stores a computer program. When the computer program is executed by a processor, the steps of the mapping method provided in the first aspect are implemented, or the steps of the mapping method provided in the second aspect are implemented.

In some embodiments of this disclosure, a random access message is transmitted based on a target mapping relationship between physical uplink shared channel PUSCH resources and synchronization signal block SSB-related resources, where the target mapping relationship is determined according to a preset mapping rule. This can avoid blind detection at all possible occasions on an SSB-related resource and a PUSCH resource, thereby reducing processing complexity.

### BRIEF DESCRIPTION OF DRAWINGS

To describe the technical solutions in some embodiments of this disclosure more clearly, the following briefly describes the accompanying drawings required for describing some embodiments of this disclosure. Apparently, the accompanying drawings in the following description show merely some embodiments of this disclosure, and a person of ordinary skill in the art may still derive other drawings from these accompanying drawings without creative efforts.
FIG. 1 is a structural diagram of a network system to which some embodiments of this disclosure may be applied;
FIG. 2 is a flowchart of a mapping method according to some embodiments of this disclosure;
FIG. 3a is a first schematic diagram of a mapping relationship between PUSCH resource units and PRACH resource units according to some embodiments of this disclosure;
FIG. 3b is a second schematic diagram of a mapping relationship between PUSCH resource units and PRACH resource units according to some embodiments of this disclosure;
FIG. 4a is a third schematic diagram of a mapping relationship between PUSCH resource units and PRACH resource units according to some embodiments of this disclosure;
FIG. 4b is a fourth schematic diagram of a mapping relationship between PUSCH resource units and PRACH resource units according to some embodiments of this disclosure;
FIG. 5a is a first schematic diagram of a mapping relationship between PUSCH resource units and SSBs according to some embodiments of this disclosure;
FIG. 5b is a second schematic diagram of a mapping relationship between PUSCH resource units and SSBs according to some embodiments of this disclosure;
FIG. 6a is a third schematic diagram of a mapping relationship between PUSCH resource units and SSBs according to some embodiments of this disclosure;
FIG. 6b is a fourth schematic diagram of a mapping relationship between PUSCH resource units and SSBs according to some embodiments of this disclosure;
FIG. 7 is a flowchart of a mapping method according to some embodiments of this disclosure;
FIG. 8 is a fifth schematic diagram of a mapping relationship between PUSCH resource units and PRACH resource units according to some embodiments of this disclosure;
FIG. 9 is a sixth schematic diagram of a mapping relationship between PUSCH resource units and PRACH resource units according to some embodiments of this disclosure;
FIG. 10 is a seventh schematic diagram of a mapping relationship between PUSCH resource units and PRACH resource units according to some embodiments of this disclosure;
FIG. 11 is an eighth schematic diagram of a mapping relationship between PUSCH resource units and PRACH resource units according to some embodiments of this disclosure;
FIG. 12 is a ninth schematic diagram of a mapping relationship between PUSCH resource units and PRACH resource units according to some embodiments of this disclosure;
FIG. 13 is a tenth schematic diagram of a mapping relationship between PUSCH resource units and PRACH resource units according to some embodiments of this disclosure;
FIG. 14 is an eleventh schematic diagram of a mapping relationship between PUSCH resource units and PRACH resource units according to some embodiments of this disclosure;
FIG. 15 is a twelfth schematic diagram of a mapping relationship between PUSCH resource units and PRACH resource units according to some embodiments of this disclosure;
FIG. 16 is a structural diagram of a terminal device according to some embodiments of this disclosure;
FIG. 17 is a structural diagram of a network-side device according to some embodiments of this disclosure;
FIG. 18 is a structural diagram of a terminal device according to some embodiments of this disclosure; and
FIG. 19 is a structural diagram of a network-side device according to some embodiments of this disclosure.

### DESCRIPTION OF EMBODIMENTS

The following clearly and completely describes the technical solutions in some embodiments of this disclosure with reference to the accompanying drawings in some embodiments of this disclosure. Apparently, the described embodiments are some but not all of the embodiments of this disclosure. All other embodiments obtained by a person of ordinary skill in the art based on the embodiments of this disclosure without creative efforts shall fall within the protection scope of this disclosure.

The terms "first", "second", and the like in this specification and claims of this application are used to distinguish between similar objects instead of describing a specific order or sequence. It should be understood that the data used in this way is interchangeable in appropriate circumstances, so that the embodiments of this application described herein can be implemented in other orders than the order illustrated or described herein. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, product, or device. "And/or" in the specification and claims indicates at least one of connected objects.

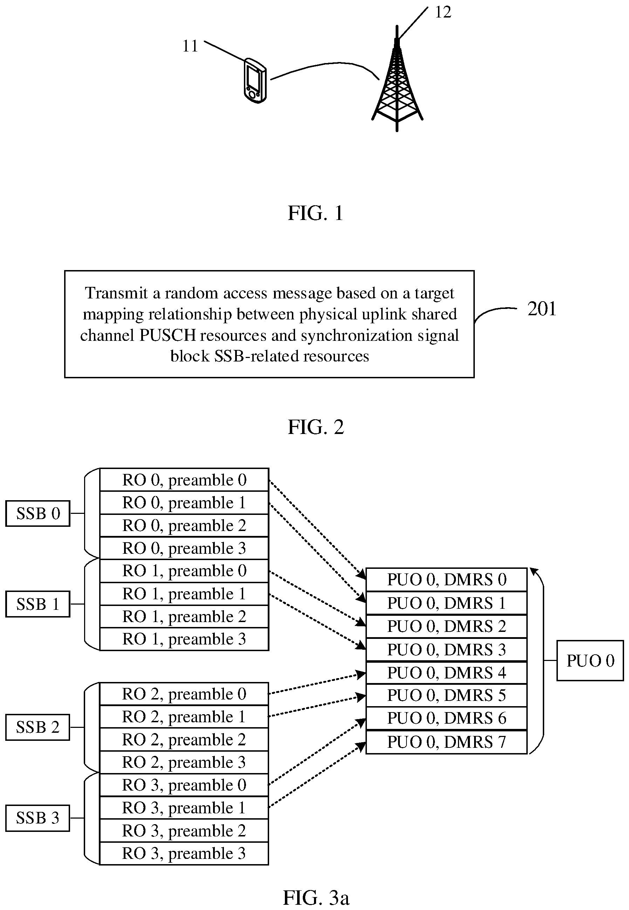

Some embodiments of this disclosure provide a mapping method. FIG. 1 is a structural diagram of a network system to which some embodiments of this disclosure may be applied. As shown in FIG. 1, the network system includes a terminal device 11 and a network-side device 12. The terminal device 11 may be a user-side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), or a wearable device (Wearable Device). It should be noted that a specific type of the terminal device 11 is not limited in some embodiments of this disclosure. The network-side device 12 may be a base station, for example, a macro base station, a long term evolution (Long Term Evolution, LTE) NodeB (evolved NodeB, eNB), a 5G NR NodeB (NodeB, NB), or a next-generation NodeB (next generation NodeB, gNB). The network-side device 12 may be alternatively a small cell, for example, a low power node (Low Power Node, LPN), a pico (pico) cell, or a femto (femto) cell; or the network-side device 12 may be an access point (Access Point, AP). The base station may be alternatively a network node including a central unit (Central Unit, CU) and a plurality of transmission reception points (Transmission Reception Point, TRP) managed and controlled by the central unit. It should be noted that a specific type of the network-side device 12 is not limited in some embodiments of this disclosure.

In some embodiments of this disclosure, the terminal device 11 may establish a target mapping relationship between a physical uplink shared channel (Physical Uplink Shared Channel, PUSCH) resource and a synchronization signal block (Synchronization Signal Block, SSB)-related resource according to a preset mapping rule.

The PUSCH resource may include a physical uplink shared channel occasion (Physical Uplink Shared Channel Occasion, PUO) and/or a physical uplink control channel (Physical Uplink Control Channel, PUCCH) resource unit of a PUO, and/or the like. The SSB-related resource may include an SSB and/or a physical random access channel (Physical Random Access Channel, PRACH) resource unit corresponding to an SSB, and/or the like.

Further, the terminal device 11 may transmit a random access message on a random access resource based on the target mapping relationship. The random access resource may include the PUSCH resource and the SSB-related resource.

Alternatively, the network-side device 12 may establish a target mapping relationship between a PUSCH resource and an SSB-related resource according to a preset mapping rule, and may further determine occasions on the PUSCH resource and the SSB-related resource based on the target mapping relationship, thereby avoiding blind detection at all possible occasions on the SSB-related resources and the PUSCH resource, reducing processing complexity, and improving processing efficiency.

The following describes in detail the mapping method provided in some embodiments of this disclosure.

Some embodiments of this disclosure provide a mapping method, applied to a terminal device. FIG. 2 is a flowchart of a mapping method according to some embodiments of this disclosure. As shown in FIG. 2, the method includes the following step:
Step 201: Transmit a random access message based on a target mapping relationship between physical uplink shared channel PUSCH resources and synchronization signal block SSB-related resources.

The target mapping relationship is determined according to a preset mapping rule.

In some embodiments of this disclosure, the PUSCH resource may include at least one of a PUO, a PUCCH resource unit of a PUO, and the like. The PUCCH resource unit may include but is not limited to one or more of a time domain resource of a PUSCH, a frequency domain resource of a PUSCH, a demodulation reference signal (Demodulation Reference Signal, DMRS) port (namely, Port), a DMRS sequence, a DMRS scrambling identifier (namely, Scrambling ID), a PUSCH scrambling identifier, and the like.

The SSB-related resource may include at least one of an SSB, a PRACH resource unit corresponding to the SSB, and the like. The PRACH resource unit may include but is not limited to at least one of a physical random access channel occasion (Physical Random Access Channel Occasion, RO), preamble (namely, Preamble), and the like.

The preset mapping rule may include one or more mapping rules. For example, the preset mapping rule may include a first mapping rule, where the first mapping rule is used to determine a mapping relationship between PUSCH resources and PRACH resource units corresponding to SSBs; or the preset mapping rule may include a second mapping rule, where the second mapping rule is used to determine a mapping relationship between PUSCH resources and SSBs; or the preset mapping rule may include both the first mapping rule and the second mapping rule, so that the mapping relationship between PUSCH resources and PRACH resource units corresponding to SSBs may be determined according to the first mapping rule, and the mapping relationship between PUSCH resources and SSBs may be determined according to the second mapping rule.

In some embodiments of this disclosure, after determining the target mapping relationship, the terminal device may transmit the random access message based on the target mapping relationship. A network side may determine occasions on PUSCH resources and SSB-related resources based on the target mapping relationship, or determine occasions on SSB-related resources based on occasions on PUSCH resources, or determine occasions on PUSCH resources based on occasions on SSB-related resources, thereby avoiding blind detection at all possible occasions on the SSB-related resources and PUSCH resources, reducing processing complexity, and improving processing efficiency.

Optionally, the preset mapping rule includes at least one of the following:
a first mapping rule, where the first mapping rule is used to determine a mapping relationship between PUSCH resource units of physical uplink shared channel occasions PUOs and SSBs; and
a second mapping rule, where the second mapping rule is used to determine a mapping relationship between PUSCH resource units of PUOs and physical random access channel PRACH resource units corresponding to SSBs.

Description is provided below with reference to examples.

Manner 1: Only the first mapping rule is configured. In this way, the terminal side may determine, according to the first mapping rule, the mapping relationship between PUSCH resources and PRACH resource units corresponding to SSBs, and may transmit the random access message based on the mapping relationship.

Manner 2: Only the second mapping rule is configured. In this way, the terminal side may determine the mapping relationship between PUSCH resources and SSBs according to the second mapping rule, and may transmit the random access message based on the mapping relationship.

Manner 3: Both the first mapping rule and the second mapping rule are configured. In this way, when PUSCH resource units are associated with PRACH resource units corresponding to SSBs, the terminal side may determine, according to the first mapping rule, the mapping relationship between PUSCH resource units and PRACH resource units corresponding to SSBs; or when PUSCH resource units are not associated with PRACH resource units corresponding to SSBs, the terminal side may determine the mapping relationship between PUSCH resources and SSBs according to the second mapping rule.

It should be noted that, when both the first mapping rule and the second mapping rule are configured, the terminal side may alternatively determine the mapping relationship between PUSCH resources and PRACH resource units corresponding to SSBs according to the first mapping rule, and determine the mapping relationship between PUSCH resources and SSBs according to the second mapping rule, and may transmit the random access message based on the foregoing two mapping relationships.

Optionally, the first mapping rule includes one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

In actual application, PUOs, PUSCH resource units, SSBs, and PRACH resource units may be numbered based on a quantity of PUOs, a quantity of PUSCH resource units of each PUO, a quantity of SSBs, a quantity of PRACH resource units associated with each SSB, and the like.

In some embodiments of this disclosure, PUSCH resource units and PRACH resource units may be mapped according to the PUO numbering order, the PUSCH resource unit numbering order, the PRACH resource unit numbering order, and the SSB numbering order.

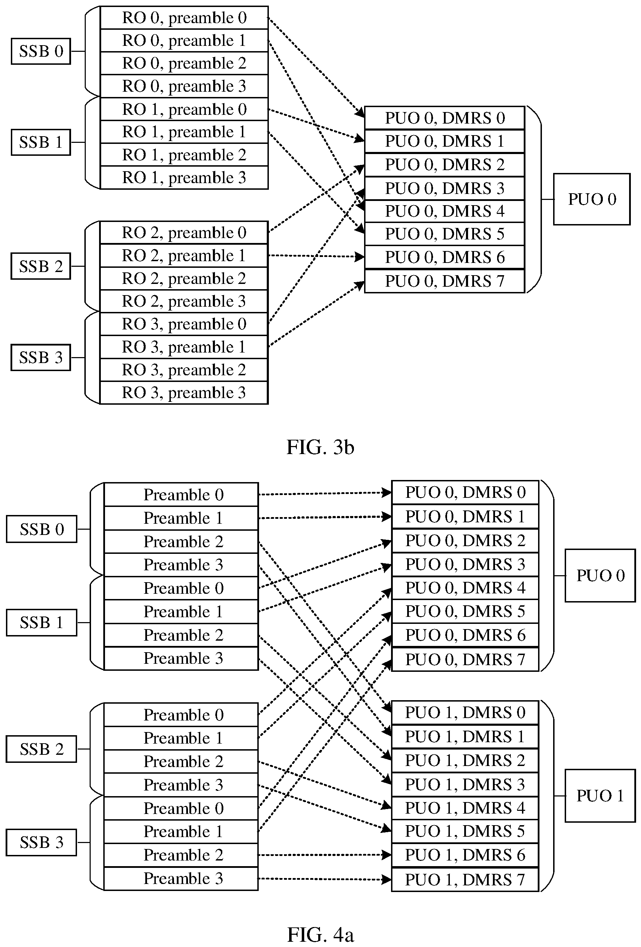

For example, as shown in FIG. 3a and FIG. 3b, for PUSCH resource units of one PUO, the PUSCH resource units of the PUO may be sequentially mapped to PRACH resource units corresponding to SSBs according to the PRACH resource unit numbering order and the SSB numbering order; or for PRACH resource units corresponding to one SSB, the PRACH resource units corresponding to the SSB may be sequentially mapped to PUSCH resource units of PUOs according to the PUSCH resource unit numbering order and the PUO numbering order.

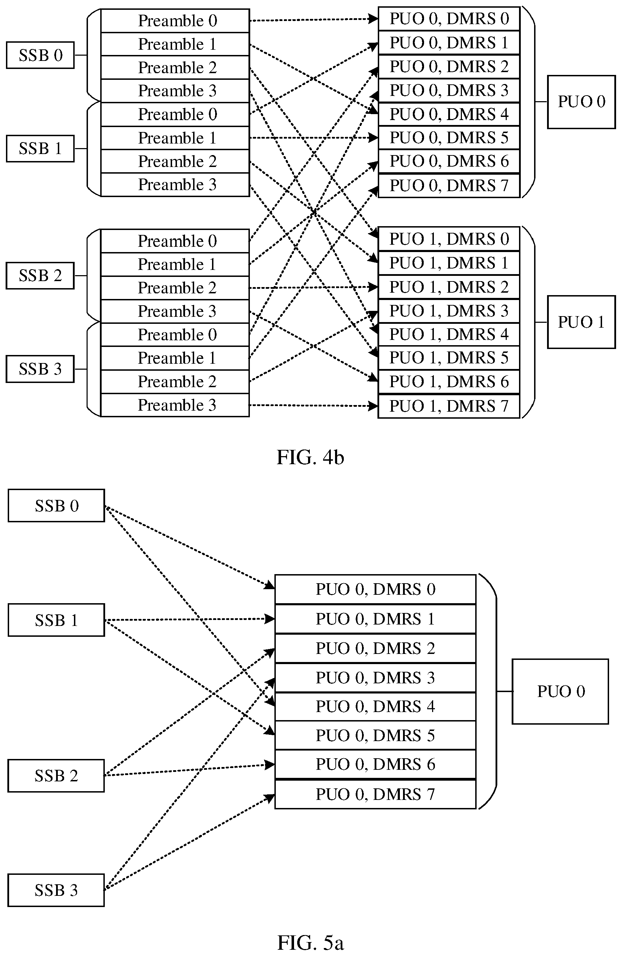

For another example, as shown in FIG. 4a and FIG. 4b, for PUSCH resource units of one PUO, the PUSCH resource units of the PUO may be sequentially mapped to PRACH resource units corresponding to a plurality of SSBs, according to the PRACH resource unit numbering order and the SSB numbering order. Optionally, the SSBs are SSBs included in one SSB group. Alternatively, for PRACH resource units corresponding to one SSB, the PRACH resource units corresponding to the SSB may be sequentially mapped to PUSCH resource units of a plurality of PUOs according to the PUSCH resource unit numbering order and the PUO numbering order.

It should be noted that PUSCH resource units and PRACH resource units may be mappped in an interlaced manner or a non-interlaced manner; and PUSCH resource units and SSBs may be mapped in an interlaced manner or a non-interlaced manner.

Optionally, that PUSCH resource units of PUOs are mapped to PRACH resource units corresponding to SSBs according to a PRACH resource unit numbering order and an SSB numbering order may include:
PUSCH resource units of PUOs are mapped to PRACH resource units corresponding to I SSBs according to the PRACH resource unit numbering order, and mapped to N SSBs according to the SSB numbering order, where I and N are both positive integers and I is less than or equal to N.

In some embodiments of this disclosure, I or N may indicate but is not limited to one of the following: a quantity of SSBs included in one SSB period, a quantity of SSBs associated with one PUO, a quantity of SSBs included in one SSB group, and a quantity of SSBs in one association period. I may be a positive integer less than or equal to N.

In actual application, the N SSBs may be grouped. In this way, the PUSCH resource units of PUOs may be mapped to PRACH resource units corresponding to SSBs in each group according to the PRACH resource unit numbering order, and then mapped to the N SSBs according to the SSB numbering order. In a mapping relationship obtained in this way, PUSCH resource units of one or more PUOs may be associated with PRACH resource units corresponding to SSBs in one group. Optionally, after being associated with all PRACH resource units corresponding to SSBs in one group, the PUSCH resource units of PUOs are then associated with PRACH resource units corresponding to SSBs in another SSB group.

PUSCH resource units of PUOs are mapped to PRACH resource units corresponding to I SSBs according to the PRACH resource unit numbering order, and are mapped to N SSBs according to the SSB numbering order. The PUSCH resource units may be mapped to the PRACH resource units corresponding to the I SSBs in an interlaced manner. Optionally, an SSB mapping spacing V is greater than or equal to 1. Alternatively, the PUSCH resource units may be mapped to the PRACH resource units corresponding to the I SSBs in a non-interlaced manner, where the SSB mapping spacing V is 0.

For example, the following information is configured: One PUO is associated with N1 SSBs, and N1 ≤ Nₜₓ, where Nₜₓ is a quantity of SSBs transmitted by the network side in each period. For one PUO, M1 PRACH resource units of PRACH resource units corresponding to each SSB associated with the PUO are associated with a PUCCH resource of the PUO, where M1 is less than or equal to a total quantity of PRACH resource units corresponding to each SSB. Therefore, a mapping relationship may be generated according to the foregoing mapping rule and based on the foregoing configuration information. In this embodiment, a quantity of PUSCH resource units of one PUO is K, and K may be directly configured by the network or determined based on configuration information.

For example, the following information is configured: Four SSBs (SSB 0 to SSB 3) are associated with one PRACH occasion (RO 0), and one SSB corresponds to four preambles. A quantity of SSBs associated with one PUO is 4. In this embodiment, a PUSCH resource unit is a DMRS, a quantity of PUSCH resource units included in one PUO is 8, and a PRACH resource unit is a preamble. For one PUO, two of preambles corresponding to each SSB are associated with DMRSs of the PUO. Therefore, based on the foregoing configuration information, PUSCH resource units of PUO 0 may be first mapped to PRACH resource units corresponding to one SSB according to the PRACH resource unit numbering order, and then mapped to four SSBs according to the SSB numbering order, and a mapping relationship shown in FIG. 3a may be obtained. The PUSCH resource units may be mapped to PRACH resource units corresponding to the four SSBs in a non-interlaced manner, wherein the SSB mapping spacing V is 0. For another example, based on the foregoing configuration information, PUSCH resource units of PUO 0 are first mapped to PRACH resource units corresponding to one SSB according to the PRACH resource unit numbering order, and then mapped to four SSBs according to the SSB numbering order, and a mapping relationship shown in FIG. 3b may be obtained. The PUSCH resource units may be mapped to PRACH resource units corresponding to the four SSBs in an interlaced manner, where the SSB mapping spacing V is 1.

It should be noted that, if N1 × M1 > K, some of PRACH resource units corresponding to one SSB are not associated with any PUSCH resource unit. If N1 × M1 < K, some PUSCH resource units of one PUO are not associated with any PRACH resource unit or SSB.

For example, the following information is configured: A quantity N1 of SSBs associated with each PUO is configured, and N1 ≤ Nₜₓ. Optionally, Nₜₓ SSBs are grouped accordingly, and a quantity of SSBs in each SSB group is N1. A quantity of PUOs associated with each SSB is N2. Therefore, a mapping relationship may be generated based on the foregoing configuration information and according to the foregoing mapping rule. It should be noted that different PUOs are not limited to being associated with different SSBs, and this specifically depends on a quantity of PRACH resource units. In this embodiment, a quantity of PUSCH resource units of one PUO is K, and K may be directly configured by the network or determined based on configuration information.

For example, the following information is configured: One PUO is associated with four SSBs (SSB 0 to SSB 3), and one SSB is associated with two PUOs (PUO 0 to PUO 1), that is, two PUOs are associated with four SSBs. One SSB corresponds to four preambles. A PUSCH resource unit is a DMRS, a PRACH resource unit is preamble (preamble), and a quantity of DMRSs for one PUSCH occasion is 8.

Therefore, based on the foregoing configuration information, PUSCH resource units of two PUOs, PUO 0 and PUO 1, may be mapped to PRACH resource units corresponding to four SSBs corresponding to one SSB group according to the PRACH resource unit numbering order, and then mapped to all SSBs according to the SSB numbering order.

Specifically, PUSCH resource units of PUO 0 are first mapped to PRACH resource units corresponding to one SSB according to the PRACH resource unit numbering order, and then mapped to four SSBs according to the SSB numbering order. Similarly, PUSCH resource units of PUO 1 are first mapped to PRACH resource units corresponding to one SSB according to the PRACH resource unit numbering order, and then mapped to four SSBs according to the SSB numbering order. A mapping relationship shown in FIG. 4a may be obtained. The PUSCH resource units may be mapped to PRACH resource units corresponding to the four SSBs in a non-interlaced manner, where the SSB mapping spacing V is 0.

For another example, based on the foregoing configuration information, PUSCH resource units of two PUOs, PUO 0 and PUO 1, are mapped to PRACH resource units corresponding to four SSBs corresponding to one SSB group according to the PRACH resource unit numbering order, and then mapped to all SSBs according to the SSB numbering order.

Specifically, PUSCH resource units of PUO 0 are first mapped to PRACH resource units corresponding to one SSB according to the PRACH resource unit numbering order, and then mapped to four SSBs according to the SSB numbering order. Similarly, PUSCH resource units of PUO 1 are first mapped to PRACH resource units corresponding to one SSB according to the PRACH resource unit numbering order, and then mapped to four SSBs according to the SSB numbering order. A mapping relationship shown in FIG. 4b may be obtained. The PUSCH resource units may be mapped to PRACH resource units corresponding to the four SSBs in an interlaced manner, where the SSB mapping spacing is V = 1.

Optionally, that PRACH resource units corresponding to SSBs are mapped to PUSCH resource units of PUOs according to a PUO numbering order and a PUSCH resource unit numbering order may include:
PRACH resource units corresponding to SSBs are mapped to PUSCH resource units of J PUOs according to the PUSCH resource unit numbering order, and mapped to M PUOs according to the PUO numbering order, where J and M are both positive integers and J is less than or equal to M.

In some embodiments of this disclosure, J or M may indicate but is not limited to one of the following: a quantity of PUOs included in one PUO period, and a quantity of PUOs in one association period. J is a positive integer less than or equal to M.

In actual application, M PUOs may be grouped. In this way, PRACH resource units corresponding to SSBs may be mapped to PUSCH resource units of PUOs in each group according to the PUSCH resource unit numbering order, and then mapped to M PUOs according to the PUO numbering order. In a mapping relationship obtained in this way, PRACH resource units of one or more SSBs may be associated with PUSCH resource units corresponding to PUOs in one group. Optionally, after being associated with all PUSCH resource units of PUOs in one group, the PRACH resource units corresponding to SSBs are then associated with PUSCH resource units corresponding to PUOs in another PUO group.

The PRACH resource units corresponding to SSBs are mapped to PUSCH resource units of J PUOs according to the PUSCH resource unit numbering order, and are mapped to M PUOs according to the PUO numbering order. The PRACH resource units corresponding to SSBs may be mapped to the PUSCH resource units of the J PUOs in an interlaced manner. Optionally, a PUSCH resource unit mapping spacing L is greater than 1. Alternatively, the PRACH resource units corresponding to SSBs may be mapped to PUSCH resource units of J PUOs in a non-interlaced manner. Optionally, the PUSCH resource unit mapping spacing Lis 1. Optionally, the PRACH resource units corresponding to SSBs are mapped to PUSCH resource units of J PUOs according to the PUSCH resource unit numbering order; and then mapped to a plurality of PUOs multiplexed in frequency domain, according to a PUO numbering order in frequency domain; and then mapped to a plurality of PUOs multiplexed in time domain, according to a PUO numbering order in time domain.

Specifically, the PRACH resource units corresponding to SSBs are mapped to PUSCH resource units first according to the PUSCH resource unit numbering order and then according to the PUO numbering order. To be specific, the PRACH resource units corresponding to SSBs are first mapped to PUSCH resource units of PUOs in one group according to the PUSCH resource unit numbering order, and then mapped to the M PUOs according to the PUO numbering order.

For example, the following information is configured: One PUO is associated with N1 SSBs, and N1 ≤ Nₜₓ, where Nₜₓ is a quantity of SSBs transmitted by the network side in each period. For one PUO, M1 PRACH resource units of PRACH resource units corresponding to each SSB associated with the PUO are associated with PUCCH resources of the PUO, where M1 is less than or equal to a total quantity of PRACH resource units corresponding to each SSB. Therefore, a mapping relationship may be generated according to the foregoing mapping rule and based on the foregoing configuration information. In this embodiment, a quantity of PUSCH resource units of one PUO is K, and K may be directly configured by the network or determined based on configuration information.

For another example, the following information is configured: Four SSBs (SSB 0 to SSB 3) are associated with one PRACH occasion (RO 0), and one SSB corresponds to four preambles. A quantity of SSBs associated with one PUO is 4. In this embodiment, a PUSCH resource unit is a DMRS, a quantity of PUSCH resource units included in one PUO is 8, and a PRACH resource unit is preamble (preamble). For one PUO, two of preambles corresponding to each SSB are associated with DMRSs of the PUSCH occasion. Therefore, based on the foregoing configuration information, PRACH resource units corresponding to SSBs are first mapped to PUSCH resource units of one PUO according to the PUSCH resource unit numbering order, and then mapped to M PUOs according to the PUO numbering order, and the mapping relationship shown in FIG. 3a may be obtained. The PRACH resource units corresponding to SSBs may be mapped to PUSCH resource units of PUOs in a non-interlaced manner. Optionally, the PUSCH resource unit mapping spacing L is 1. For another example, based on the foregoing configuration information, the PRACH resource units corresponding to SSBa are first mapped to PUSCH resource units of one PUO according to the PUSCH resource unit numbering order, and then mapped to M PUOs according to the PUO numbering order, and the mapping relationship shown in FIG. 3b may be obtained. The PRACH resource units corresponding to SSBs may be mapped to PUSCH resource units of PUOs in an interlaced manner. Optionally, the PUSCH resource unit mapping spacing Lis 4.

It should be noted that, if N1 × M1 > K, some of PRACH resource units corresponding to one SSB are not associated with any PUSCH resource unit. If N1 × M1 < K, some PUSCH resource units of one PUO are not associated with any PRACH resource unit or SSB.

For example, the following information is configured: A quantity N1 of SSBs associated with each PUO is configured, and N1 ≤ Nₜₓ. Optionally, Nₜₓ SSBs are grouped accordingly, and a quantity of SSBs in each SSB group is N1. A quantity of PUOs associated with each SSB is N2. Therefore, a mapping relationship may be generated based on the foregoing configuration information and according to the foregoing mapping rule. It should be noted that different PUOs are not limited to being associated with different SSBs, and this specifically depends on the quantity of PRACH resource units. In this embodiment, a quantity of PUSCH resource units of one PUO is K, and K may be directly configured by the network or determined based on configuration information.

For example, the following information is configured: One PUO is associated with four SSBs (SSB 0 to SSB 3), and one SSB is associated with two PUOs (PUO 0 to PUO 1), that is, two PUOs are associated with four SSBs. One SSB corresponds to four preambles. A PUSCH resource unit is a DMRS, a PRACH resource unit is preamble (preamble), and a quantity of DMRSs for one PUSCH occasion is 8.

Optionally, based on the foregoing configuration information, PRACH resource units corresponding to four SSBs of an SSB group may be first mapped to PUSCH resource units of two PUOs according to the PUSCH resource unit numbering order, and then mapped to all PUOs according to the PUO numbering order.

For example, PRACH resource units corresponding to SSB 0 may be first mapped to PUSCH resource units of one PUO according to the PUSCH resource unit numbering order, and then mapped to two PUOs according to the PUO numbering order. Similarly, PRACH resource units corresponding to SSB 1 are first mapped to PUSCH resource units of one PUO according to the PUSCH resource unit numbering order, and then mapped to two PUOs according to the PUO numbering order. For SSB 2 and SSB 3, details are not described herein. The mapping relationship shown in FIG. 4a may be obtained. The PRACH resource units corresponding to SSBs may be mapped to PUSCH resource units of PUOs in a non-interlaced manner. Optionally, the PUSCH resource unit mapping spacing L is 1.

Optionally, based on the foregoing configuration information, PRACH resource units corresponding to four SSBs of an SSB group may be alternatively first mapped to PUSCH resource units of two PUOs according to the PUSCH resource unit numbering order, and then mapped to all PUOs according to the PUO numbering order.

For example, PRACH resource units corresponding to SSB 0 are first mapped to PUSCH resource units of one PUO according to the PUSCH resource unit numbering order, and then mapped to two PUOs according to the PUO numbering order. Similarly, PRACH resource units corresponding to SSB 1 are first mapped to PUSCH resource units of one PUO according to the PUSCH resource unit numbering order, and then mapped to two PUOs according to the PUO numbering order. For SSB 2 and SSB 3, details are not described herein. The mapping relationship shown in FIG. 4b may be obtained. The PRACH resource units corresponding to SSBs may be mapped to PUSCH resource units of PUOs in an interlaced manner. Optionally, the PUSCH resource unit mapping spacing Lis 4.

Optionally, the second mapping rule may include:
SSBs are mapped to PUSCH resource units of PUOs according to a PUSCH resource unit numbering order and a PUO numbering order.

In some embodiments of this disclosure, PUSCH resource units and SSBs may be mapped according to the PUO numbering order, the PUSCH resource unit numbering order, and the SSB numbering order.

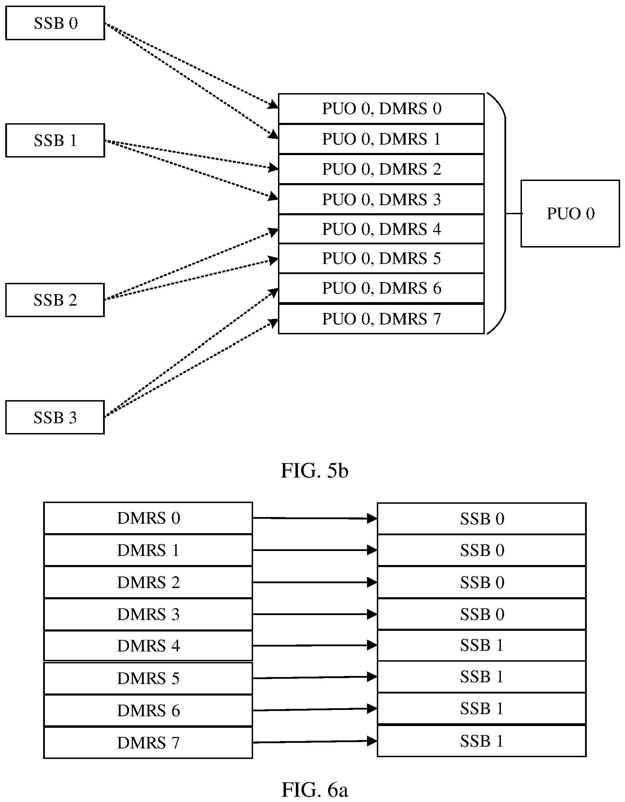

For example, SSBs may be sequentially mapped to PUSCH resource units corresponding to the SSBs according to the PUSCH resource unit numbering order and the SSB numbering order, as shown in FIG. 5a and FIG. 5b.

It should be noted that PUSCH resource units and SSBs may be mapped in an interlaced manner or a non-interlaced manner.

Optionally, that SSBs are mapped to PUSCH resource units of PUOs according to a PUSCH resource unit numbering order and a PUO numbering order may include:
SSBs are mapped to PUSCH resource units of one PUO according to the PUSCH resource unit numbering order, and mapped to P PUOs according to the PUO numbering order, where P is a positive integer.

In some embodiments of this disclosure, P may indicate but is not limited to one of the following: a quantity of PUOs included in one PUO period, and a quantity of PUOs in one association period.

For example, the following information is configured: One PUO is associated with N1 SSBs, and N1 ≤ Nₜₓ, where Nₜₓ is a quantity of SSBs transmitted by the network side in each period. For one PUO, one SSB is associated with M2 PUSCH resource units. Therefore, a mapping relationship may be generated according to the foregoing mapping rule and based on the foregoing configuration information. In this embodiment, a quantity of PUSCH resource units of one PUO is K, and K may be directly configured by the network or determined based on configuration information.

For example, the following information is configured: A quantity of SSBs associated with one PUO is 4. For one PUO, a quantity of PUSCH resource units associated with each SSB is 2. In this embodiment, four SSBs (SSB 0 to SSB 3) are associated with PUO 0, a PUSCH resource unit is a DMRS, and a quantity of PUSCH resource units included in one PUO is 8.

Optionally, based on the foregoing configuration information, SSBs may be first mapped to PUSCH resource units of one PUO according to the PUSCH resource unit numbering order, and then mapped to M PUOs according to the PUO numbering order, and a mapping relationship shown in FIG. 5a may be obtained. SSBs may be mapped to PUSCH resource units of PUOs in an interlaced manner. Optionally, the PUSCH resource unit mapping spacing L is 4.

Optionally, based on the foregoing configuration information, SSBs may be alternatively first mapped to PUSCH resource units of one PUO according to the PUSCH resource unit numbering order, and then mapped to M PUOs according to the PUO numbering order, and a mapping relationship shown in FIG. 5b may be obtained. SSBs may be mapped to the PUSCH resource units of PUOs in a non-interlaced manner. Optionally, the PUSCH resource unit mapping spacing L is 1.

Optionally, a quantity N1 of SSBs associated with each PUO is configured, and N1 ≤ Nₜₓ. Optionally, Nₜₓ SSBs are grouped accordingly, and a quantity of SSBs in each SSB group is N1. In this embodiment, a quantity of SSBs in each SSB group is 4.

Optionally, one PUCCH resource unit is associated with one SSB.

In some embodiments of this disclosure, each PUCCH resource unit may be associated with one SSB.

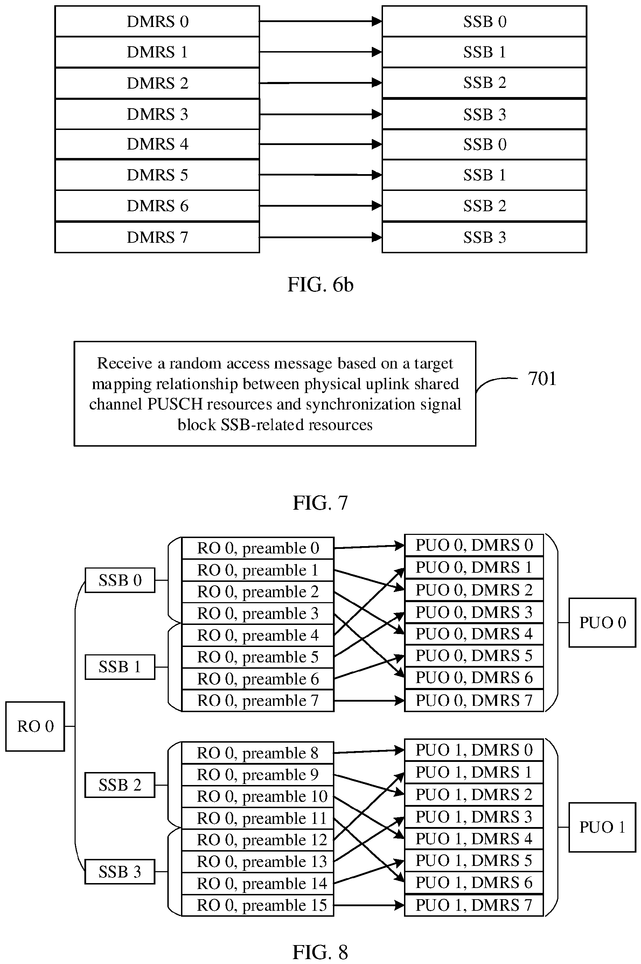

Further, two PUSCH resource units with adjacent numbers may be associated with a same SSB. For example, PUSCH resource unit k is associated with SSB n, and PUSCH resource unit k+1 is associated with the SSB n, as shown in FIG. 6a. Alternatively, two PUSCH resource units with adjacent numbers may be associated with different SSBs. For example, PUSCH resource unit k is associated with SSB n, and PUSCH resource unit k+1 is associated with SSB n+1, as shown in FIG. 6b.

Optionally, PUSCH resource units and SSBs may be mapped in an interlaced or non-interlaced manner;
or
PUSCH resource units and PRACH resource units corresponding to SSBs may be mapped in an interlaced or non-interlaced manner.

Optionally, before the transmitting a random access message based on a target mapping relationship between physical uplink shared channel PUSCH resources and synchronization signal block SSB-related resources, the method may further include:
in a case that first configuration information exists, establishing the mapping relationship between PUSCH resource units of PUOs and SSBs according to a first mapping rule, where the first configuration information is used to indicate that PUSCH resource units are associated with PRACH resource units corresponding to SSBs; or
in other cases, establishing the mapping relationship between PUSCH resource units of PUOs and physical random access channel PRACH resource units corresponding to SSBs according to a second mapping rule.

In some embodiments of this disclosure, the first configuration information may explicitly or implicitly indicate that the PUSCH resource units are associated with the PRACH resource units corresponding to the SSB. For example, the first configuration information may carry identification information used to indicate that the PUSCH resource units are associated with the PRACH resource units corresponding to the SSB; or the first configuration information carries a parameter, and it may be indirectly learned, by using the parameter, that the PUSCH resource units are associated with the PRACH resource units corresponding to the SSB.

Specifically, in some embodiments of this disclosure, when the PUSCH resource units are associated with the PRACH resource units corresponding to the SSB, the mapping relationship between PUSCH resource units of PUOs and PRACH resource units corresponding to SSBs may be established only according to the first mapping rule. Otherwise, the mapping relationship between PUSCH resource units of PUOs and PRACH resource units corresponding to SSBs may be determined according to the second mapping rule.

It should be noted that, for relevant content of the first mapping rule in this embodiment, reference may be made to the foregoing descriptions of the first mapping rule, and for relevant content of the second mapping rule in this embodiment, reference may be made to the foregoing descriptions of the second mapping rule. Details are not described herein again.

Optionally, a mapping parameter of the target mapping relationship is determined by configuration information, and the configuration information may include at least one of the following:
an SSB parameter associated with one PUO, where the SSB parameter includes a quantity of SSBs or a set of SSBs;
a quantity of PUSCH resource units of one PUO;
that Q PRACH resource units corresponding to one target SSB are associated with PUSCH resource units of PUO(s), where the target SSB is an SSB corresponding to the PUO(s), and Q is a positive integer;
a PUSCH resource unit mapping spacing L, where L is greater than or equal to 1;
an SSB mapping spacing V, where V is greater than or equal to 0;
a PUO parameter associated with one SSB, where the PUO parameter includes at least one of the following: time domain resources of a PUO, frequency domain resources of a PUO, a quantity of PUOs, and PUO index(es);
a PRACH resource unit parameter associated with one PUSCH resource unit of one PUO, where the PRACH resource unit parameter includes a quantity of PRACH resource units or a set of PRACH resource units;
SSB grouping information, where the SSB grouping information includes at least one of an SSB grouping manner, a quantity of SSB groups, and a quantity of SSBs in each SSB group; and
a quantity of PUSCH resource units of one PUO that are associated with one SSB.

In some embodiments of this disclosure, the configuration information may be configured by the network side.

For a quantity of SSBs or a set of SSBs associated with one PUO, if the configuration information does not include the parameter, a quantity of SSBs associated with each PUO may be a default value, for example, Nₜₓ, where Nₜₓ is a quantity of SSBs transmitted by the network side in each period.

Optionally, when the PUSCH resource unit includes a DMRS port (namely, DMRS Port) and a DMRS scrambling identifier, a quantity of PUSCH resource units of one PUO may be one of the following:
a quantity of DMRS ports of one PUO; and
a product of a quantity of DMRS ports of one PUO and a quantity of DMRS scrambling identifiers of one PUO.

The PUSCH resource unit mapping spacing L may be a gap between numbers of PUSCH resource units associated with two consecutive PRACH resource units when the PRACH resource units corresponding to SSBs are associated with PUSCH resource units. Specifically, if the spacing L is 1, PUSCH resource units and PRACH resource units corresponding to SSBs may be mapped in a non-interlaced (Non-Interlace or non-interleave) manner; or if the spacing L > 1, PUSCH resource units and PRACH resource units corresponding to SSBs are mapped in an interlaced (Interlace or interleave) manner.

Optionally, in a case that L = 1, PUSCH resource units and SSBs are mapped in a non-interlaced manner, or PUSCH resource units and PRACH resource units corresponding to SSBs are mapped in a non-interlaced manner; or
in a case that L > 1, PUSCH resource units and SSBs are mapped in an interlaced manner, or PUSCH resource units and PRACH resource units corresponding to SSBs are mapped in an interlaced manner.

The SSB mapping spacing V may be a gap between numbers of SSBs associated with two consecutive PUSCH resource units when the PUSCH resource units of PUOs are associated with PRACH resource units corresponding to SSBs. Specifically, in a case that the SSB mapping spacing V = 0, SSBs and PUSCH resource units are mapped in a non-interlaced manner; or in a case tht the SSB mapping spacing V > 0, SSBs and PUSCH resource units are mapped in an interlaced manner.

For the PRACH resource unit parameter associated with one PUSCH resource unit of one PUO, if the configuration information does not include the parameter, each PUSCH resource unit may be associated with one PRACH resource unit.

For the SSB grouping information, optionally, when SSB grouping needs to be performed, grouping may be performed based on at least one of the following:
the network side configures a quantity of SSB groups;
SSBs corresponding to one RO serve as one group;
SSBs corresponding to all ROs at one time unit serve as one group;
SSBs corresponding to all ROs in each time unit serve as one group; and
a quantity of configuration periods included in one association period.

Optionally, the PUSCH resource may include at least one of the following:
a time domain resource of a PUSCH;
a frequency domain resource of a PUSCH;
a DMRS port;
a DMRS sequence;
a DMRS scrambling identifier; and
a PUSCH scrambling identifier.

It should be noted that, when the PUSCH resource unit includes a plurality of the foregoing parameters, combinations of different values of the plurality of parameters indicate different PUSCH resource units. For example, the PUSCH resource unit includes a DMRS port and a DMRS scrambling identifier (namely, Scrambling ID). In this case, DMRS port a1 and DMRS scrambling identifier b1 indicate PUSCH resource unit c1, and DMRS port a2 and DMRS scrambling identifier b1 indicate PUSCH resource unit c2.

In addition, when the PUSCH resource unit includes a plurality of the foregoing parameters, a quantity of PUSCH resource units is determined by a quantity of each parameter in the plurality of parameters. For example, the quantity of PUSCH resource units is determined by a product of quantities of all parameters in the plurality of parameters.

For example, the PUSCH resource unit includes a DMRS port and a DMRS scrambling identifier, a quantity of DMRS ports is a1, and a quantity of DMRS scrambling identifiers is a2. In this case, the quantity of PUSCH resource units may be a1 × a2.

Optionally, the network side may configure at least one of a quantity of time domain resources, a quantity of frequency domain resources, a quantity of time-frequency domain resources, a quantity of DMRS ports, a quantity of DMRS sequences, a quantity of DMRS scrambling IDs, and a quantity of PUSCH scrambling IDs for PUSCH.

Some embodiments of this disclosure provide a mapping method, applied to a network-side device. FIG. 7 is a flowchart of a mapping method according to some embodiments of this disclosure. As shown in FIG. 7, the method includes the following steps.

Step 701: Receive a random access message based on a target mapping relationship between physical uplink shared channel PUSCH resources and synchronization signal block SSB-related resources.

The target mapping relationship is determined according to a preset mapping rule.

In some embodiments of this disclosure, the PUSCH resource may include at least one of a PUO, a PUCCH resource unit of a PUO, and the like. The PUCCH resource unit may include but is not limited to one or more of a time domain resource of a PUSCH, a frequency domain resource of a PUSCH, a DMRS port (namely, Port), a DMRS sequence, a DMRS scrambling identifier (namely, Scrambling ID), a PUSCH scrambling identifier, and the like.

The SSB-related resource may include at least one of an SSB, a PRACH resource unit corresponding to the SSB, and the like. The PRACH resource unit may include but is not limited to at least one of an RO, preamble (namely, Preamble), and the like.

The preset mapping rule may include one or more mapping rules. For example, the preset mapping rule may include a first mapping rule, where the first mapping rule is used to determine a mapping relationship between PUSCH resources and PRACH resource units corresponding to SSBs; or the preset mapping rule may include a second mapping rule, where the second mapping rule is used to determine a mapping relationship between PUSCH resources and SSBs; or the preset mapping rule may include both the first mapping rule and the second mapping rule, so that the mapping relationship between PUSCH resources and PRACH resource units corresponding to SSBs may be determined according to the first mapping rule, and the mapping relationship between PUSCH resources and SSBs may be determined according to the second mapping rule.

In some embodiments of this disclosure, when receiving the random access message, the network side may determine occasions on the PUSCH resource and the SSB-related resource based on the target mapping relationship, or determine an occasion on the SSB-related resource based on an occasion on the PUSCH resource, or determine an occasion on the PUSCH resource based on an occasion on the SSB-related resource, thereby avoiding blind detection at all possible occasions on the SSB-related resource and the PUSCH resource, reducing processing complexity, and improving processing efficiency.

Optionally, the preset mapping rule includes at least one of the following:
a first mapping rule, where the first mapping rule is used to determine a mapping relationship between PUSCH resource units of physical uplink shared channel occasions PUOs and SSBs; and
a second mapping rule, where the second mapping rule is used to determine a mapping relationship between PUSCH resource units of PUOs and physical random access channel PRACH resource units corresponding to SSBs.

Optionally, the first mapping rule may include one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

Optionally, that PUSCH resource units of PUOs are mapped to PRACH resource units corresponding to SSBs according to a PRACH resource unit numbering order and an SSB numbering order may include:
PUSCH resource units of PUOs are mapped to PRACH resource units corresponding to I SSBs according to the PRACH resource unit numbering order, and mapped to N SSBs according to the SSB numbering order, where I and N are both positive integers and I is less than or equal to N.

Optionally, that PRACH resource units corresponding to SSBs are mapped to PUSCH resource units of PUOs according to a PUO numbering order and a PUSCH resource unit numbering order may include:
PRACH resource units corresponding to SSBs are mapped to PUSCH resource units of J PUOs according to the PUSCH resource unit numbering order, and mapped to M PUOs according to the PUO numbering order, where J and M are both positive integers and J is less than or equal to M.

Optionally, the second mapping rule may include:
SSBs are mapped to PUSCH resource units of PUOs according to a PUSCH resource unit numbering order and a PUO numbering order.

Optionally, that SSBs are mapped to PUSCH resource units of PUOs according to a PUSCH resource unit numbering order and a PUO numbering order may include:
SSBs are mapped to PUSCH resource units of one PUO according to the PUSCH resource unit numbering order, and mapped to P PUOs according to the PUO numbering order, where P is a positive integer.

Optionally, one PUCCH resource unit is associated with one SSB.

Optionally, PUSCH resource units and SSBs are mapped in an interlaced manner or non-interlaced manner;
or
PUSCH resource units and PRACH resource units corresponding to SSBs are mapped in an interlaced manner or non-interlaced manner.

Optionally, the method may further include:
in a case that first configuration information exists, establishing the mapping relationship between PUSCH resource units of PUOs and SSBs according to a first mapping rule, where the first configuration information is used to indicate that PUSCH resource units are associated with PRACH resource units corresponding to SSBs; or
in other cases, establishing the mapping relationship between PUSCH resource units of PUOs and physical random access channel PRACH resource units corresponding to SSBs according to a second mapping rule.

Optionally, a mapping parameter of the target mapping relationship is determined by configuration information, and the configuration information includes at least one of the following:
an SSB parameter associated with one PUO, where the SSB parameter includes a quantity of SSBs or a set of SSBs;
a quantity of PUSCH resource units of one PUO;
that Q PRACH resource units corresponding to one target SSB are associated with PUSCH resource units of PUO(s), where the target SSB is an SSB corresponding to the PUO(s), and Q is a positive integer;
a PUSCH resource unit mapping spacing L, where L is greater than or equal to 1;
an SSB mapping spacing V, where V is greater than or equal to 0;
a PUO parameter associated with one SSB, where the PUO parameter includes at least one of the following: time domain resources of a PUO, frequency domain resources of a PUO, a quantity of PUOs, and PUO index(es);
a PRACH resource unit parameter associated with one PUSCH resource unit of one PUO, where the PRACH resource unit parameter includes a quantity of PRACH resource units or a set of PRACH resource units;

SSB grouping information, where the SSB grouping information includes at least one of an SSB grouping manner, a quantity of SSB groups, and a quantity of SSBs in each SSB group; and
a quantity of PUSCH resource units of one PUO that are associated with one SSB.

Optionally, in a case that L = 1, PUSCH resource units and SSBs are mapped in a non-interlaced manner, or PUSCH resource units and PRACH resource units corresponding to SSBs are mapped in a non-interlaced manner; or
in a case that L > 1, PUSCH resource units and SSBs are mapped in an interlaced manner, or PUSCH resource units and PRACH resource units corresponding to SSBs are mapped in an interlaced manner.

Optionally, the PUSCH resource includes at least one of the following:
a time domain resource of a PUSCH;
a frequency domain resource of a PUSCH;
a DMRS port;
a DMRS sequence;
a DMRS scrambling identifier; and
a PUSCH scrambling identifier.

The following describes in detail the mapping method provided in some embodiments of this disclosure with reference to examples.

It is assumed that a quantity of SSBs transmitted by the network side in each period is Nₜₓ, SSB number is s {s = 0, 1, 2, ..., Ntx}, a quantity of ROs associated with each SSB is N = SSB-per-RACH-occasion, whose value is {1/8, 1/4, 1/2, 1, 2, 4, 8, 16}, and a quantity of preambles associated with each RO is P = CB-preambles-per-SSB × max(1, SSB-per-RACH-occasion). Therefore, it can be learned that a quantity of ROs obtained after one round of mapping is performed between SSBs and PRACHs is R' = Nₜₓ × (1/SSB-per-RACH-occasion), a quantity of ROs in one association period (where the association period is an integer multiple of a PRACH configuration period, and one SSB is associated with at least one RO) is R (where R is an integer multiple of R'), and a quantity of preambles associated with each RO is P = CB-preambles-per-SSB × max(1, SSB-per-RACH-occasion).

Numbers r (r = 0, 1, 2, ..., R-1) are assigned to ROs mapped in one association period, and numbers p (p = 0, 1, 2, ..., P) are assigned to preambles in each RO, where P indicates a quantity of preambles in one RO. Therefore, (s, r, p) may indicate a number of a PRACH resource unit associated with an SSB.

Numbers u (u = 0, 1, 2, ..., U) are assigned to PUOs used to transmit a random access message of a 2-step RACH in one period, and numbers k (k = 0, 1, 2, ..., K) are assigned to PUSCH resource units in each PUO, where K may identify a quantity of PUSCH resource units. Therefore, (u, k) may indicate a number of a PUSCH resource unit.

Mapping manner 1:
The following information is configured:
For PUOs, a quantity N1 of SSBs associated with each PUO is configured, and N1 ≤ Nₜₓ, that is, each PUO is associated with N1 SSBs.

For PUOs, a quantity M1 of preambles associated with an SSB corresponding to each PUO is configured (a quantity of preambles corresponding to each SSB is R, and M1 ≤ R), that is, only M1 preambles of preambles associated with each SSB are associated with PUSCH resource units of PUOs.

PUSCH resource units (u, k) of one PUO may be associated with preambles (s, r, p) corresponding to SSBs in one of the following ways:
PUSCH resource units are associated with preambles of SSBs first based on preambles and then based on SSBs, that is, PUSCH resource units are mapped to preambles corresponding to N1 SSBs according to a preamble numbering order, where an SSB mapping spacing is V = 0, and then mapped to Nₜₓ SSBs according to an an SSB numbering order. A mapping relationship shown in FIG. 3a may be obtained.

The PUSCH resource units are associated with preambles of SSBs first based on preambles and then based on SSBs, that is, the PUSCH resource units are mapped to preambles corresponding to N1 SSBs according to a preamble numbering order, where an SSB mapping spacing is V = 1, and then mapped to Nₜₓ SSBs according to an SSB numbering order. A mapping relationship shown in FIG. 3b may be obtained.

Preambles (s, r, p) corresponding to one SSB are associated with PUSCH resource units (u, k) first based on the PUSCH resource units and then based on PUOs, that is, the preambles are first mapped to PUSCH resource units corresponding to one PUO according to a PUSCH resource unit numbering order, where a PUSCH resource mapping spacing is L = 1, and then mapped to a plurality of PUOs according to a PUO numbering order, as indicated by the mapping relationship shown in FIG. 3a.

Preambles (s, r, p) corresponding to one SSB are associated with PUSCH resource units (u, k) first based on the PUSCH resource units and then based on PUOs, that is, the preambles are first mapped to PUSCH resource units corresponding to one PUO according to a PUSCH resource unit numbering order, where a PUSCH resource mapping spacing is L = 4, and then mapped to a plurality of PUOs according to a PUO numbering order, as indicated by the mapping relationship shown in FIG. 3b.

It should be noted that, if N1 × M1 > K, some preambles are not associated with any PUSCH resource unit; or if N1 × M1 < K, some PUSCH resource units are not associated with any preamble or SSB.

Mapping manner 2:
The following information is configured: For PUOs, a quantity N1 of SSBs associated with each PUO is configured, and N1 ≤ Nₜₓ. Further, Nₜₓ SSBs may be grouped accordingly, a quantity of SSBs in each group is N1, and a quantity of preambles corresponding to each SSB is R.

A quantity of PUOs associated with one SSB is N2.

All PUSCH resource units (u, k) of U PUOs may be associated with preambles (s, r, p) corresponding to SSBs in one of the following ways, where U is a total quantity of PUOs in one configuration period or association period:
The PUSCH resource units are associated with preambles of SSBs first based on preambles and then based on SSBs, that is, the PUSCH resource units are mapped to preambles corresponding to N1 SSBs in one SSB group according to a preamble numbering order, where an SSB mapping spacing is V = 0, and then mapped to Nₜₓ SSBs according to an SSB numbering order. After being associated with all preambles corresponding to SSBs in one group, the PUSCH resource units of PUOs are then associated with preambles corresponding to SSBs in another SSB group, as indicated by a mapping relationship shown in FIG. 4a.

The PUSCH resource units are associated with preambles of SSBs first based on preambles and then based on SSBs, that is, the PUSCH resource units are mapped to preambles corresponding to N1 SSBs in one SSB group according to a preamble numbering order, where an SSB mapping spacing is V = 1, and then mapped to Nₜₓ SSBs according to an SSB numbering order. After being associated with all preambles corresponding to SSBs in one group, the PUSCH resource units of PUOs are then associated with preambles corresponding to SSBs in another SSB group, as indicated by a mapping relationship shown in FIG. 4b.

Preambles (s, r, p) corresponding to one SSB group are associated with PUSCH resource units (u, k) first based on the PUSCH resource units and then based on PUOs, that is, the preambles are first mapped to PUSCH resource units corresponding to Y PUOs according to a PUSCH resource unit numbering order, where a PUSCH resource mapping spacing is L, and then mapped to U PUOs according to a PUO numbering order. After all preambles corresponding to SSBs in one group are associated with PUSCH resource units of PUOs, preambles corresponding to SSBs in another SSB group are then associated with PUSCH resource units, as indicated by mapping relationships shown in FIG. 4a (L = 1) and FIG. 4b (L = 4).

It should be noted that, if Nₜₓ × R > U × K, preambles of some SSBs are not associated with any PUSCH resource unit; or if Nₜₓ × R < U × K, some PUSCH resource units are not associated with preambles of any SSB.

### Example 1

For example, four SSBs (SSB 0 to SSB 3) are associated with one PRACH occasion (for example, RO 0), and one SSB corresponds to four preambles (namely, preamble). A quantity of SSBs associated with one PUO is 2. A PUSCH resource unit is a DMRS, and a quantity of PUSCH resource units is 8.

Implementation 1: DMRSs of PUOs are associated with preambles first based on preambles and then based on SSBs, and a plurality of consecutive DMRSs are associated with different SSBs.

For example, DMRSs of PUOs are first mapped to preambles corresponding to two SSBs according to a preamble numbering order, and then mapped according to an SSB numbering order, where an SSB mapping spacing is V = 1.

For another example, preambles of SSBs are associated with DMRSs of PUOs first based on PUSCH resource units and then based on PUOs, and a plurality of consecutive DMRSs are associated with different SSBs.

Specifically, preambles corresponding to SSBs are first mapped to DMRSs of one PUO according to a PUSCH resource unit numbering order, and then mapped according to a PUO numbering order, where a PUSCH resource unit mapping spacing is L = 2, SSBs of one RO serve as one SSB group, and four SSBs are associated with one RO, as shown in FIG. 8:
DMRS (0, 0) of PUO 0 is associated with preamble (0, 0, 0) corresponding to SSB 0;
DMRS (0, 1) of PUO 0 is associated with preamble (1, 0, 4) corresponding to SSB 1;
DMRS (0, 2) of PUO 0 is associated with preamble (0, 0, 1) corresponding to SSB 0;
DMRS (0, 3) of PUO 0 is associated with preamble (1, 0, 5) corresponding to SSB 1;

Implementation 2: DMRSs of PUOs are associated with preambles first based on preambles and then based on SSBs, and a plurality of consecutive DMRSs are associated with a same SSB.

For example, DMRSs of PUOs are first mapped to preambles corresponding to two SSBs according to a preamble numbering order, and then mapped according to an SSB numbering order, where an SSB mapping spacing is V = 0.

For another example, preambles of SSBs are associated with DMRSs of PUOs first based on PUSCH resource units and then based on PUOs, and a plurality of consecutive DMRSs are associated with a same SSB.

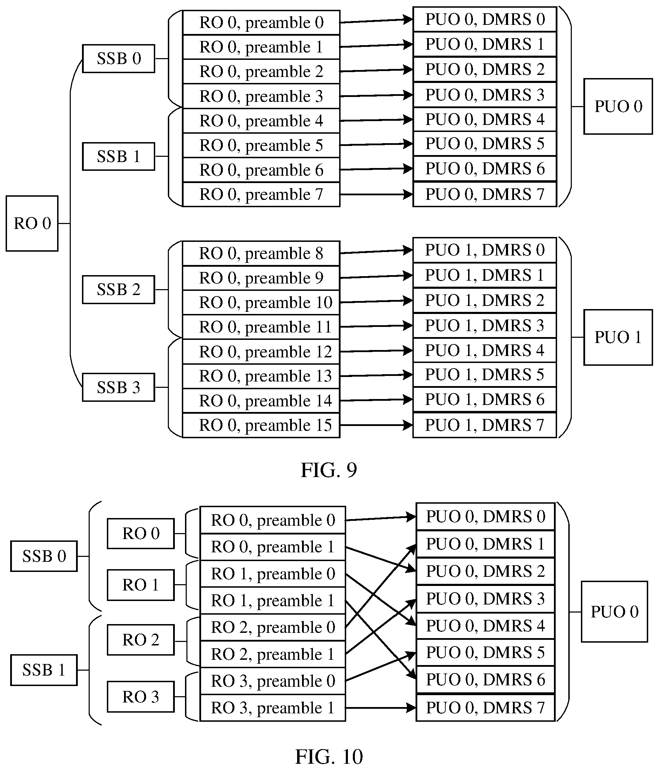

Specifically, preambles corresponding to SSBs are first mapped to DMRSs of one PUO according to a PUSCH resource unit numbering order, and then mapped according to a PUO numbering order, where a PUSCH numbering spacing is L = 1, SSBs of one RO serve as one SSB group, and four SSBs are associated with one RO, as shown in FIG. 9:
DMRS (0, 0) of PUO 0 is associated with preamble (0, 0, 0) corresponding to SSB 0;
DMRS (0, 1) of PUO 0 is associated with preamble (0, 0, 1) corresponding to SSB 0;
DMRS (0, 2) of PUO 0 is associated with preamble (0, 0, 2) corresponding to SSB 0;
DMRS (0, 3) of PUO 0 is associated with preamble (0, 0, 3) corresponding to SSB 0;

### Example 2

For example, one SSB is associated with two PRACH occasions, and one SSB corresponds to four preambles.

A quantity of SSBs associated with one PUO is 2, a PUSCH resource unit is a DMRS, and a quantity of PUSCH resource units is 8.

Implementation 1: DMRSs of PUOs are associated with preambles first based on preambles and then based on SSBs, and a plurality of consecutive DMRSs are associated with different SSBs, which is interlaced mapping.

For example, DMRSs of PUOs are first mapped to preambles corresponding to two SSBs according to a preamble numbering order, and then mapped according to an SSB numbering order, where an SSB mapping spacing is V = 1.

For another example, preambles of SSBs are associated with DMRSs of PUOs first based on PUSCH resource units and then based on PUOs, and a plurality of consecutive DMRSs are associated with different SSBs.

Specifically, preambles corresponding to SSBs are first mapped to DMRSs of one PUO according to a PUSCH resource unit numbering order, and then mapped according to a PUO numbering order, where a PUSCH numbering spacing is L = 2.

Two SSBs serve as one SSB group, and one SSB is associated with two ROs, as shown in FIG. 10:
DMRS (0, 0) of PUO 0 is associated with preamble (0, 0, 0) corresponding to SSB 0;
DMRS (0, 1) of PUO 0 is associated with preamble (1, 2, 0) corresponding to SSB 1;
DMRS (0, 2) of PUO 0 is associated with preamble (0, 0, 1) corresponding to SSB 0;
DMRS (0, 3) of PUO 0 is associated with preamble (1, 2, 1) corresponding to SSB 1;

Implementation 2: DMRSs of PUOs are first mapped according to a preamble numbering order, and then associated with preambles according to an SSB numbering order, and a plurality of consecutive DMRSs are associated with a same SSB, which is non-interlaced mapping.

For example, DMRSs of PUOs are first mapped to preambles corresponding to two SSBs according to a preamble numbering order, and then mapped according to an SSB numbering order, where an SSB mapping spacing is V = 0.

For another example, preambles of SSBs are associated with DMRSs of PUOs first based on PUSCH resource units and then based on PUOs, and a plurality of consecutive DMRSs are associated with a same SSB.

Specifically, preambles corresponding to SSBs are first mapped to DMRSs of one PUO according to a PUSCH resource unit numbering order, and then mapped according to a PUO numbering order, where a PUSCH numbering spacing is L = 1.

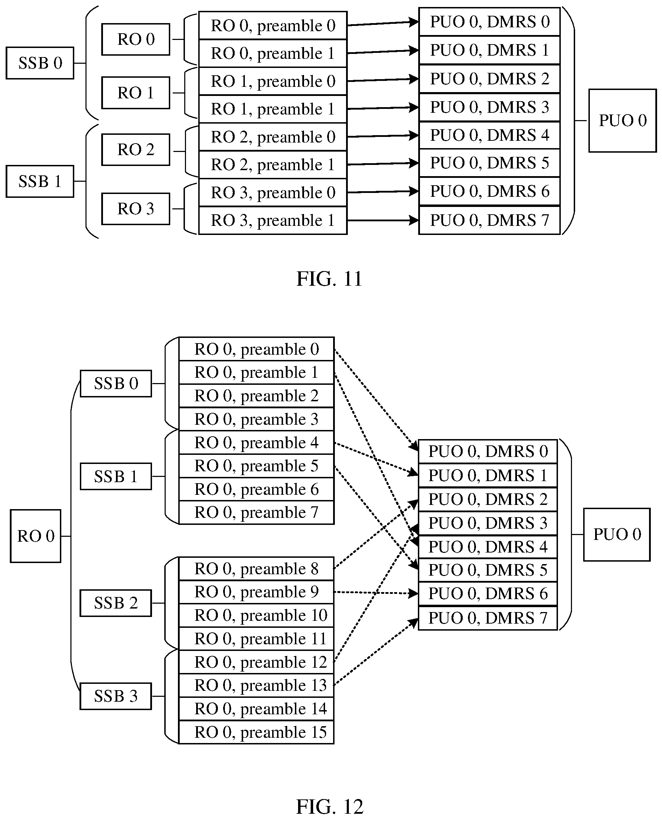

Two SSBs serve as one SSB group, and one SSB is associated with two ROs, as shown in FIG. 11:
DMRS (0, 0) of PUO 0 is associated with preamble (0, 0, 0) corresponding to SSB 0;
DMRS (0, 1) of PUO 0 is associated with preamble (0, 0, 1) corresponding to SSB 0;
DMRS (0, 2) of PUO 0 is associated with preamble (0, 1, 0) corresponding to SSB 0;
DMRS (0, 3) of PUO 0 is associated with preamble (0, 1, 1) corresponding to SSB 0;

### Example 3

For example, four SSBs (SSB 0 to SSB 3) are associated with one PRACH occasion (RO 0), and one SSB corresponds to four preambles. A quantity of SSBs associated with one PUO is 4, a PUSCH resource unit is a DMRS, and a quantity of PUSCH resource units is 8. For one PUO, two of preambles corresponding to each SSB are associated with DMRSs of the PUO.

Implementation 1: DMRSs of PUOs are associated with preambles first based on preambles and then based on SSBs, and a plurality of consecutive DMRSs are associated with different SSBs, which is interlaced mapping.

For example, DMRSs of PUOs are first mapped to preambles corresponding to four SSBs according to a preamble numbering order, and then mapped according to an SSB numbering order, where an SSB mapping spacing is V = 1.

For another example, preambles of SSBs are associated with DMRSs of PUOs first based on PUSCH resource units and then based on PUOs, and a plurality of consecutive DMRSs are associated with different SSBs.

Specifically, preambles corresponding to SSBs are first mapped to DMRSs of one PUO according to a PUSCH resource unit numbering order, and then mapped according to a PUO numbering order, where a PUSCH numbering spacing is L = 4.

Four SSBs serve as one SSB group, and four SSBs are associated with one RO, as shown in FIG. 12:
DMRS (0, 0) of PUO 0 is associated with preamble (0, 0, 0) corresponding to SSB 0;
DMRS (0, 1) of PUO 0 is associated with preamble (1, 0, 4) corresponding to SSB 1;
DMRS (0, 2) of PUO 0 is associated with preamble (2, 0, 8) corresponding to SSB 2;
DMRS (0, 3) of PUO 0 is associated with preamble (3, 0, 12) corresponding to SSB 3;

Implementation 2: DMRSs of PUOs are first mapped according to a preamble numbering order, and then associated with preambles according to an SSB numbering order, where DMRSs and SSBs are mapped in a non-interlaced manner.

For example, DMRSs of PUOs are first mapped to preambles corresponding to four SSBs according to a preamble numbering order, and then mapped according to an SSB numbering order, where an SSB mapping spacing is V = 0.

For another example, preambles of SSBs are associated with DMRSs of PUOs first based on PUSCH resource units and then based on PUOs, and a plurality of consecutive DMRSs are associated with a same SSB.

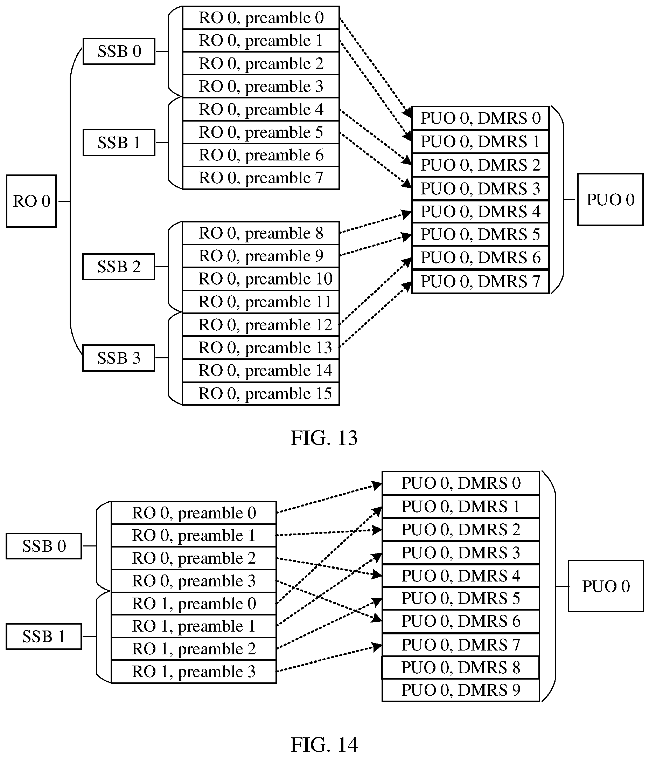

Specifically, preambles corresponding to SSBs are first mapped to DMRSs of one PUO according to a PUSCH resource unit numbering order, and then mapped according to a PUO numbering order, where a PUSCH numbering spacing is L = 1, four SSBs serve as one SSB group, and one SSB is associated with two ROs, as shown in FIG. 13:
DMRS (0, 0) of PUO 0 is associated with preamble (0, 0, 0) corresponding to SSB 0;
DMRS (0, 1) of PUO 0 is associated with preamble (0, 0, 1) corresponding to SSB 0;
DMRS (0, 2) of PUO 0 is associated with preamble (1, 0, 4) corresponding to SSB 1;
DMRS (0, 3) of PUO 0 is associated with preamble (1, 0, 5) corresponding to SSB 1;

### Example 4

For example, four SSBs (SSB 0 to SSB 3) are respectively associated with four PRACH occasions (RO 0 to RO 3), and one SSB corresponds to four preambles. A quantity of SSBs associated with one PUO is 4, a PUSCH resource unit is a DMRS, and a quantity of PUSCH resource units is 8. For one PUO, two of preambles corresponding to each SSB are associated with DMRSs of the PUO.

Implementation 1: DMRSs of PUOs are associated with preambles first based on preambles and then based on SSBs, and a plurality of consecutive DMRSs are associated with different SSBs, which is interlaced mapping.

For example, DMRSs of PUOs are first mapped to preambles corresponding to four SSBs according to a preamble numbering order, and then mapped according to an SSB numbering order, where an SSB mapping spacing is V = 1.

For another example, preambles of SSBs are associated with DMRSs of PUOs first based on PUSCH resource units and then based on PUOs, and a plurality of consecutive DMRSs are associated with different SSBs.

Specifically, preambles corresponding to SSBs are first mapped to DMRSs of one PUO according to a PUSCH resource unit numbering order, and then mapped according to a PUO numbering order, where a PUSCH numbering spacing is L = 4, four SSBs serve as one SSB group, and one SSB is associated with one RO, as shown in FIG. 3b:
DMRS (0, 0) of PUO 0 is associated with preamble (0, 0, 0) corresponding to SSB 0;
DMRS (0, 1) of PUO 0 is associated with preamble (1, 1, 0) corresponding to SSB 1;
DMRS (0, 2) of PUO 0 is associated with preamble (2, 2, 0) corresponding to SSB 2;
DMRS (0, 3) of PUO 0 is associated with preamble (3, 3, 0) corresponding to SSB 3;

Implementation 2: DMRSs of PUOs are first mapped according to a preamble numbering order, and then associated with preambles according to an SSB numbering order, where PUSCH resource units and SSBs are mapped in a non-interlaced manner.

For example, DMRSs of PUOs are first mapped to preambles corresponding to four SSBs according to a preamble numbering order, and then mapped according to an SSB numbering order, where an SSB mapping spacing is V = 0.

For another example, preambles of SSBs are associated with DMRSs of PUOs first based on PUSCH resource units and then based on PUOs, and a plurality of consecutive DMRSs are associated with a same SSB.

Specifically, preambles corresponding to SSBs are first mapped to DMRSs of one PUO according to a PUSCH resource unit numbering order, and then mapped according to a PUO numbering order, where a PUSCH numbering spacing is L= 1.

Four SSBs serve as one group, and one SSB is associated with one RO, as shown in FIG. 3a:
DMRS (0, 0) of PUO 0 is associated with preamble (0, 0, 0) corresponding to SSB 0;
DMRS (0, 1) of PUO 0 is associated with preamble (0, 0, 1) corresponding to SSB 1;
DMRS (0, 2) of PUO 0 is associated with preamble (1, 1, 0) corresponding to SSB 0;
DMRS (0, 3) of PUO 0 is associated with preamble (1, 1, 1) corresponding to SSB 1;

### Example 5

For example, two SSBs (SSB 0 to SSB 1) are respectively associated with two PRACH occasions (RO 0 and RO 1), and one SSB corresponds to four preambles. A quantity N of SSBs associated with one PUO is 2, a PUSCH resource unit is a DMRS, and a quantity K of PUSCH resource units is 10.

In this implementation, DMRSs of PUOs are associated with preambles first based on preambles and then based on SSBs, and a plurality of consecutive DMRSs are associated with different SSBs, which is interlaced mapping.

For example, DMRSs of PUOs are first mapped to preambles corresponding to two SSBs according to a preamble numbering order, and then mapped according to an SSB numbering order, where an SSB mapping spacing is V = 1.

For another example, preambles of SSBs are associated with DMRSs of PUOs first based on PUSCH resource units and then based on PUOs, and a plurality of consecutive DMRSs are associated with different SSBs.

Specifically, preambles corresponding to SSBs are first mapped to DMRSs of one PUO according to a PUSCH resource unit numbering order, and then mapped according to a PUO numbering order, where a PUSCH numbering spacing is L = 2.

Two SSBs serve as one group. A quantity of PUSCH resource units is greater than that of preambles corresponding to one group of SSBs. Therefore, some PUSCH resource units are not associated with preambles, as shown in FIG. 14:
DMRS (0, 0) of PUO 0 is associated with preamble (0, 0, 0) corresponding to SSB 0;
DMRS (0, 1) of PUO 0 is associated with preamble (1, 1, 0) corresponding to SSB 1;
DMRS (0, 2) of PUO 0 is associated with preamble (0, 0, 1) corresponding to SSB 0;
DMRS (0, 3) of PUO 0 is associated with preamble (1, 1, 1) corresponding to SSB 1;

It should be noted that, because N × M < K (that is, 2 × 4 < 10), DMRS 8 and DMRS 9 of the PUO are not associated with any preamble.

### Example 6

For example, in four SSBs (SSB 0 to SSB 3), one SSB corresponds to four preambles. A quantity of SSBs associated with one PUO is 4, a PUSCH resource unit is a DMRS, and a quantity of PUSCH resource units is 8.

Implementation 1: DMRSs of PUOs are associated with preambles first based on preambles and then based on SSBs, and a plurality of consecutive DMRSs are associated with different SSBs, which is interlaced mapping.

For example, DMRSs of PUOs are first mapped to preambles corresponding to four SSBs of one SSB group according to a preamble numbering order, and then mapped according to an SSB numbering order, where an SSB mapping spacing is V = 1.

For another example, preambles of SSBs are associated with DMRSs of PUOs first based on PUSCH resource units and then based on PUOs, and a plurality of consecutive DMRSs are associated with different SSBs.

Specifically, preambles corresponding to SSBs are first mapped to DMRSs of two PUOs according to a PUSCH resource unit numbering order, and then mapped according to a PUO numbering order, where a PUSCH numbering spacing is L= 4.

Four SSBs serve as one group, as shown in FIG. 4b:
preamble (0, 0, 0) corresponding to SSB 0 is associated with DMRS (0, 0) of PUO 0;
preamble (0, 0, 1) corresponding to SSB 0 is associated with DMRS (0, 4) of PUO 0;
preamble (0, 0, 2) corresponding to SSB 0 is associated with DMRS (1, 0) of PUO 1;
preamble (0, 0, 3) corresponding to SSB 0 is associated with DMRS (1, 4) of PUO 1;

Implementation 2: DMRSs of PUOs are associated with preambles first based on preambles and then based on SSBs, and a plurality of consecutive DMRSs are associated with a same SSB, which is non-interlaced mapping.

For example, DMRSs of PUOs are first mapped to preambles corresponding to four SSBs of one SSB group according to a preamble numbering order, and then mapped according to an SSB numbering order, where an SSB mapping spacing is V = 0.

For another example, preambles of SSBs are associated with DMRSs of PUOs first based on PUSCH resource units and then based on PUOs, and a plurality of consecutive DMRSs are associated with a same SSB.

Specifically, preambles corresponding to SSBs are first mapped to DMRSs of two PUOs according to a PUSCH resource unit numbering order, and then mapped according to a PUO numbering order, where a PUSCH numbering spacing is L = 1.

Four SSBs serve as one group, as shown in FIG. 4a:
preamble (0, 0, 0) corresponding to SSB 0 is associated with DMRS (0, 0) of PUO 0;
preamble (0, 0, 1) corresponding to SSB 0 is associated with DMRS (0, 1) of PUO 0;
preamble (0, 0, 2) corresponding to SSB 0 is associated with DMRS (1, 0) of PUO 1;
preamble (0, 0, 3) corresponding to SSB 0 is associated with DMRS (1, 1) of PUO 1;

### Example 7

For example, one SSB is associated with four PRACH occasions, and one SSB corresponds to R = 16 preambles. A quantity of SSBs associated with one PUO is N = 1/2, that is, two PUOs are associated with one SSB.

DMRSs of PUOs are associated with preambles first based on preambles and then based on SSBs, and a plurality of consecutive DMRSs are associated with a same SSB, which is non-interlaced mapping.

For example, DMRSs of PUOs are first mapped to preambles corresponding to one SSB according to a preamble numbering order, and then mapped according to an SSB numbering order, where an SSB mapping spacing is V = 0.

For another example, preambles of SSBs are associated with DMRSs of PUOs first based on PUSCH resource units and then based on PUOs, and a plurality of consecutive DMRSs are associated with a same SSB.

Specifically, preambles corresponding to SSBs are first mapped to DMRSs of two PUOs according to a PUSCH resource unit numbering order, and then mapped according to a PUO numbering order, where a PUSCH numbering spacing is L = 1.

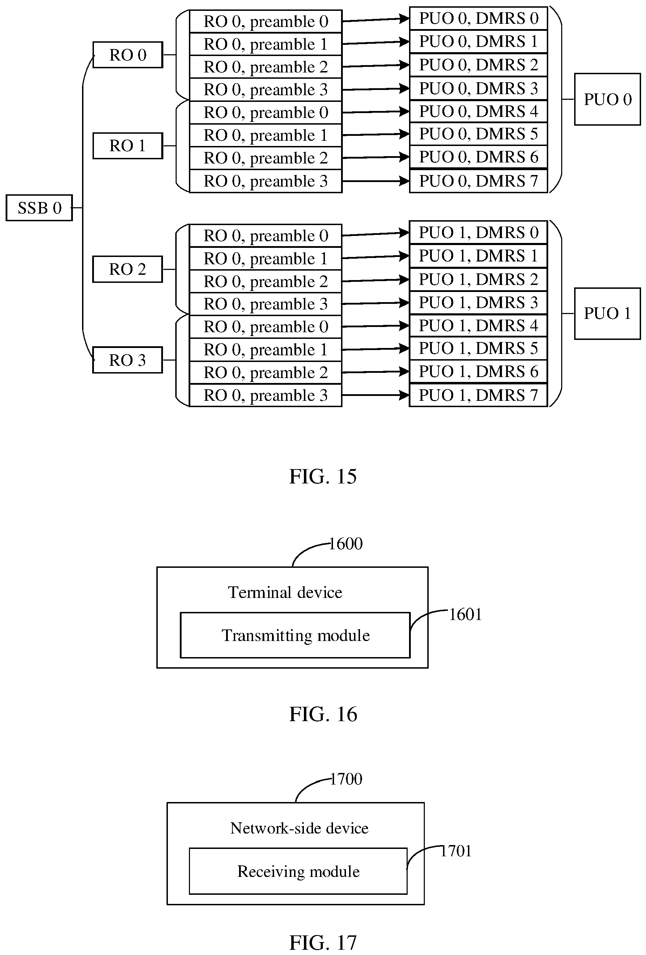

One SSB serves as one group, and one SSB is associated with four ROs, as shown in FIG. 15:
DMRS (0, 0) of PUO 0 is associated with preamble (0, 0, 0) corresponding to SSB 0;
DMRS (0, 1) of PUO 0 is associated with preamble (0, 0, 1) corresponding to SSB 1;
DMRS (0, 2) of PUO 0 is associated with preamble (0, 0, 2) corresponding to SSB 0;
DMRS (0, 3) of PUO 0 is associated with preamble (1, 2, 3) corresponding to SSB 1;

FIG. 16 is a structural diagram of a terminal device according to some embodiments of this disclosure. As shown in FIG. 16, the terminal device 1600 includes:
a transmitting module 1601, configured to transmit a random access message based on a target mapping relationship between physical uplink shared channel PUSCH resources and synchronization signal block SSB-related resources.

The target mapping relationship is determined according to a preset mapping rule.

Optionally, the preset mapping rule includes at least one of the following:
a first mapping rule, where the first mapping rule is used to determine a mapping relationship between PUSCH resource units of physical uplink shared channel occasions PUOs and SSBs; and
a second mapping rule, where the second mapping rule is used to determine a mapping relationship between PUSCH resource units of PUOs and physical random access channel PRACH resource units corresponding to SSBs.

Optionally, the first mapping rule includes one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

Optionally, that PUSCH resource units of PUOs are mapped to PRACH resource units corresponding to SSBs according to a PRACH resource unit numbering order and an SSB numbering order includes:
PUSCH resource units of PUOs are mapped to PRACH resource units corresponding to I SSBs according to the PRACH resource unit numbering order, and mapped to N SSBs according to the SSB numbering order, where I and N are both positive integers and I is less than or equal to N.

Optionally, that PRACH resource units corresponding to SSBs are mapped to PUSCH resource units of PUOs according to a PUO numbering order and a PUSCH resource unit numbering order includes:
PRACH resource units corresponding to SSBs are mapped to PUSCH resource units of J PUOs according to the PUSCH resource unit numbering order, and mapped to M PUOs according to the PUO numbering order, where J and M are both positive integers and J is less than or equal to M.

Optionally, the second mapping rule includes:
SSBs are mapped to PUSCH resource units of PUOs according to a PUSCH resource unit numbering order and a PUO numbering order.

Optionally, that SSBs are mapped to PUSCH resource units of PUOs according to a PUSCH resource unit numbering order and a PUO numbering order includes:
SSBs are mapped to PUSCH resource units of one PUO according to the PUSCH resource unit numbering order, and mapped to P PUOs according to the PUO numbering order, where P is a positive integer.

Optionally, one PUCCH resource unit is associated with one SSB.

Optionally, PUSCH resource units and SSBs are mapped in an interlaced manner or non-interlaced manner;
or
PUSCH resource units and PRACH resource units corresponding to SSBs are mapped in an interlaced manner or non-interlaced manner.

Optionally, the terminal device further includes an establishing module. The establishing module is specifically configured to:
before the transmitting a random access message based on a target mapping relationship between physical uplink shared channel PUSCH resources and synchronization signal block SSB-related resources, in a case that first configuration information exists, establish the mapping relationship between PUSCH resource units of PUOs and SSBs according to a first mapping rule, where the first configuration information is used to indicate that PUSCH resource units are associated with PRACH resource units corresponding to SSBs; or
in other cases, establish the mapping relationship between PUSCH resource units of PUOs and physical random access channel PRACH resource units corresponding to SSBs according to a second mapping rule.

Optionally, a mapping parameter of the target mapping relationship is determined by configuration information, and the configuration information includes at least one of the following:
an SSB parameter associated with one PUO, where the SSB parameter includes a quantity of SSBs or a set of SSBs;
a quantity of PUSCH resource units of one PUO;
that Q PRACH resource units corresponding to one target SSB are associated with PUSCH resource units of PUO(s), where the target SSB is an SSB corresponding to the PUO(s), and Q is a positive integer;
a PUSCH resource unit mapping spacing L, where L is greater than or equal to 1;
an SSB mapping spacing V, where V is greater than or equal to 0;
a PUO parameter associated with one SSB, where the PUO parameter includes at least one of the following: time domain resources of a PUO, frequency domain resources of a PUO, a quantity of PUOs, and PUO index(es);
a PRACH resource unit parameter associated with one PUSCH resource unit of one PUO, where the PRACH resource unit parameter includes a quantity of PRACH resource units or a set of PRACH resource units;
SSB grouping information, where the SSB grouping information includes at least one of an SSB grouping manner, a quantity of SSB groups, and a quantity of SSBs in each SSB group; and
a quantity of PUSCH resource units of one PUO that are associated with one SSB.

Optionally, in a case that L = 1, PUSCH resource units and SSBs are mapped in a non-interlaced manner, or PUSCH resource units and PRACH resource units corresponding to SSBs are mapped in a non-interlaced manner; or
in a case that L > 1, PUSCH resource units and SSBs are mapped in an interlaced manner, or PUSCH resource units and PRACH resource units corresponding to SSBs are mapped in an interlaced manner.

Optionally, the PUSCH resource includes at least one of the following:
a time domain resource of a PUSCH;
a frequency domain resource of a PUSCH;
a DMRS port;
a DMRS sequence;
a DMRS scrambling identifier; and
a PUSCH scrambling identifier.

The terminal device 1600 provided in some embodiments of this disclosure is capable of implementing processes that are implemented by the terminal device in the foregoing method embodiments. To avoid repetition, details are not described herein again.

In the terminal device 1600 in some embodiments of this disclosure, the transmitting module 1601 is configured to transmit a random access message based on a target mapping relationship between physical uplink shared channel PUSCH resources and synchronization signal block SSB-related resources, where the target mapping relationship is determined according to a preset mapping rule. This can avoid blind detection at all possible occasions on an SSB-related resource and a PUSCH resource, thereby reducing processing complexity.

FIG. 17 is a structural diagram of a network-side device according to some embodiments of this disclosure. As shown in FIG. 17, the network-side device 1700 includes:
a receiving module 1701, configured to receive a random access message based on a target mapping relationship between physical uplink shared channel PUSCH resources and synchronization signal block SSB-related resources.

The target mapping relationship is determined according to a preset mapping rule.

Optionally, the preset mapping rule includes at least one of the following:
a first mapping rule, where the first mapping rule is used to determine a mapping relationship between PUSCH resource units of physical uplink shared channel occasions PUOs and SSBs; and
a second mapping rule, where the second mapping rule is used to determine a mapping relationship between PUSCH resource units of PUOs and physical random access channel PRACH resource units corresponding to SSBs.

Optionally, the first mapping rule includes one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

Optionally, that PUSCH resource units of PUOs are mapped to PRACH resource units corresponding to SSBs according to a PRACH resource unit numbering order and an SSB numbering order includes:
PUSCH resource units of PUOs are mapped to PRACH resource units corresponding to I SSBs according to the PRACH resource unit numbering order, and mapped to N SSBs according to the SSB numbering order, where I and N are both positive integers and I is less than or equal to N.

Optionally, that PRACH resource units corresponding to SSBs are mapped to PUSCH resource units of PUOs according to a PUO numbering order and a PUSCH resource unit numbering order includes:
PRACH resource units corresponding to SSBs are mapped to PUSCH resource units of J PUOs according to the PUSCH resource unit numbering order, and mapped to M PUOs according to the PUO numbering order, where J and M are both positive integers and J is less than or equal to M.

Optionally, the second mapping rule includes:
SSBs are mapped to PUSCH resource units of PUOs according to a PUSCH resource unit numbering order and a PUO numbering order.

Optionally, that SSBs are mapped to PUSCH resource units of PUOs according to a PUSCH resource unit numbering order and a PUO numbering order includes:
SSBs are mapped to PUSCH resource units of one PUO according to the PUSCH resource unit numbering order, and mapped to P PUOs according to the PUO numbering order, where P is a positive integer.

The network-side device 1700 provided in some embodiments of this disclosure is capable of implementing processes that are implemented by the network-side device in the foregoing method embodiments. To avoid repetition, details are not described again herein.

In the network-side device 1700 in some embodiments of this disclosure, the receiving module 1701 is configured to receive a random access message based on a target mapping relationship between physical uplink shared channel PUSCH resources and synchronization signal block SSB-related resources, where the target mapping relationship is determined according to a preset mapping rule. This can avoid blind detection at all possible occasions on an SSB-related resource and a PUSCH resource, thereby reducing processing complexity.

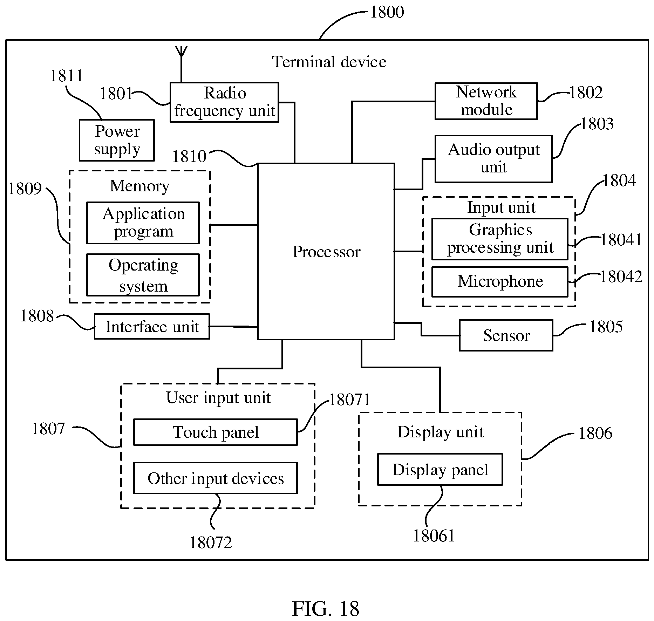

FIG. 18 is a structural diagram of another terminal device according to some embodiments of this disclosure. Referring to FIG. 18, the terminal device 1800 includes but is not limited to components such as a radio frequency unit 1801, a network module 1802, an audio output unit 1803, an input unit 1804, a sensor 1805, a display unit 1806, a user input unit 1807, an interface unit 1808, a memory 1809, a processor 1810, and a power supply 1811. A person skilled in the art can understand that the terminal device structure shown in FIG. 18 does not constitute a limitation on the terminal device. The terminal device may include more or fewer components than those shown in the figure, or some components may be combined, or there may be a different component layout. In some embodiments of this disclosure, the terminal device includes but is not limited to a mobile phone, a tablet computer, a notebook computer, a palmtop computer, an in-vehicle terminal, a wearable device, a pedometer, and the like.

The processor 1810 is configured to transmit a random access message based on a target mapping relationship between physical uplink shared channel PUSCH resources and synchronization signal block SSB-related resources, where the target mapping relationship is determined according to a preset mapping rule.

The preset mapping rule includes at least one of the following:
a first mapping rule, where the first mapping rule is used to determine a mapping relationship between PUSCH resource units of physical uplink shared channel occasions PUOs and SSBs; and
a second mapping rule, where the second mapping rule is used to determine a mapping relationship between PUSCH resource units of PUOs and physical random access channel PRACH resource units corresponding to SSBs.

Optionally, the first mapping rule includes one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

Optionally, that PUSCH resource units of PUOs are mapped to PRACH resource units corresponding to SSBs according to a PRACH resource unit numbering order and an SSB numbering order includes:
PUSCH resource units of PUOs are mapped to PRACH resource units corresponding to I SSBs according to the PRACH resource unit numbering order, and mapped to N SSBs according to the SSB numbering order, where I and N are both positive integers and I is less than or equal to N.

Optionally, that PRACH resource units corresponding to SSBs are mapped to PUSCH resource units of PUOs according to a PUO numbering order and a PUSCH resource unit numbering order includes:
PRACH resource units corresponding to SSBs are mapped to PUSCH resource units of J PUOs according to the PUSCH resource unit numbering order, and mapped to M PUOs according to the PUO numbering order, where J and M are both positive integers and J is less than or equal to M.

Optionally, the second mapping rule includes:
SSBs are mapped to PUSCH resource units of PUOs according to a PUSCH resource unit numbering order and a PUO numbering order.

Optionally, that SSBs are mapped to PUSCH resource units of PUOs according to a PUSCH resource unit numbering order and a PUO numbering order includes:
SSBs are mapped to PUSCH resource units of one PUO according to the PUSCH resource unit numbering order, and mapped to P PUOs according to the PUO numbering order, where P is a positive integer.

Optionally, one PUCCH resource unit is associated with one SSB.

Optionally, PUSCH resource units and SSBs are mapped in an interlaced manner or non-interlaced manner;
or
PUSCH resource units and PRACH resource units corresponding to SSBs are mapped in an interlaced manner or non-interlaced manner.

Optionally, before the transmitting a random access message based on a target mapping relationship between physical uplink shared channel PUSCH resources and synchronization signal block SSB-related resources, the method further includes:
in a case that first configuration information exists, establishing the mapping relationship between PUSCH resource units of PUOs and SSBs according to a first mapping rule, where the first configuration information is used to indicate that PUSCH resource units are associated with PRACH resource units corresponding to SSBs; or
in other cases, establish the mapping relationship between PUSCH resource units of PUOs and physical random access channel PRACH resource units corresponding to SSBs according to a second mapping rule.

Optionally, a mapping parameter of the target mapping relationship is determined by configuration information, and the configuration information includes at least one of the following:
an SSB parameter associated with one PUO, where the SSB parameter includes a quantity of SSBs or a set of SSBs;
a quantity of PUSCH resource units of one PUO;
that Q PRACH resource units corresponding to one target SSB are associated with PUSCH resource units of PUO(s), where the target SSB is an SSB corresponding to the PUO(s), and Q is a positive integer;
a PUSCH resource unit mapping spacing L, where L is greater than or equal to 1;
an SSB mapping spacing V, where V is greater than or equal to 0;
a PUO parameter associated with one SSB, where the PUO parameter includes at least one of the following: time domain resources of a PUO, frequency domain resources of a PUO, a quantity of PUOs, and PUO index(es);
a PRACH resource unit parameter associated with one PUSCH resource unit of one PUO, where the PRACH resource unit parameter includes a quantity of PRACH resource units or a set of PRACH resource units;
SSB grouping information, where the SSB grouping information includes at least one of an SSB grouping manner, a quantity of SSB groups, and a quantity of SSBs in each SSB group; and
a quantity of PUSCH resource units of one PUO that are associated with one SSB.

Optionally, in a case that L = 1, PUSCH resource units and SSBs are mapped in a non-interlaced manner, or PUSCH resource units and PRACH resource units corresponding to SSBs are mapped in a non-interlaced manner; or
in a case that L > 1, PUSCH resource units and SSBs are mapped in an interlaced manner, or PUSCH resource units and PRACH resource units corresponding to SSBs are mapped in an interlaced manner.

Optionally, the PUSCH resource includes at least one of the following:
a time domain resource of a PUSCH;
a frequency domain resource of a PUSCH;
a DMRS port;
a DMRS sequence;
a DMRS scrambling identifier; and
a PUSCH scrambling identifier.

It should be understood that, in some embodiments of this disclosure, the radio frequency unit 1801 may be configured to transmit or receive a signal in an information transmitting/receiving or call process. Specifically, the radio frequency unit 1801 receives downlink data from a base station, transmits the downlink data to the processor 1810 for processing, and transmits uplink data to the base station. Usually, the radio frequency unit 1801 includes but is not limited to an antenna, at least one amplifier, a transceiver, a coupler, a low noise amplifier, a duplexer, and the like. In addition, the radio frequency unit 1801 may further communicate with a network and another device by using a wireless communications system.

The terminal device provides wireless broadband Internet access for a user by using the network module 1802, for example, helps the user transmit and receive e-mails, browse web pages, and access streaming media.

The audio output unit 1803 may convert audio data received by the radio frequency unit 1801 or the network module 1802 or stored in the memory 1809 into an audio signal and output the audio signal as a sound. In addition, the audio output unit 1803 may further provide audio output (for example, a call signal received sound or a message received sound) that is related to a specific function performed by the terminal device 1800. The audio output unit 1803 includes a speaker, a buzzer, a receiver, and the like.

The input unit 1804 is configured to receive an audio or video signal. The input unit 1804 may include a graphics processing unit (Graphics Processing Unit, GPU) 18041 and a microphone 18042. The graphics processing unit 18041 processes image data of a static picture or a video that is obtained by an image capture apparatus (for example, a camera) in a video capture mode or an image capture mode. A processed image frame may be displayed on the display unit 1806. The image frame processed by the graphics processing unit 18041 may be stored in the memory 1809 (or another storage medium) or transmitted by the radio frequency unit 1801 or the network module 1802. The microphone 18042 may receive sounds and process such sounds into audio data. The processed audio data may be converted in a telephone call mode into a format that can be transmitted by the radio frequency unit 1801 to a mobile communications base station, for outputting.

The terminal device 1800 further includes at least one sensor 1805, for example, an optical sensor, a motion sensor, and other sensors. Specifically, the optical sensor includes an ambient light sensor and a proximity sensor. The ambient light sensor may adjust brightness of a display panel 18061 based on intensity of ambient light. When the terminal device 1800 moves to an ear, the proximity sensor may turn off the display panel 18061 and/or backlight. As a motion sensor, an accelerometer sensor may detect magnitudes of accelerations in all directions (usually three axes), may detect a magnitude and a direction of gravity when the terminal device is still, and may be applied to posture recognition (for example, landscape/portrait mode switching, a related game, or magnetometer posture calibration) of the terminal device, a function related to vibration recognition (for example, a pedometer or a keystroke), or the like. The sensor 1805 may further include a fingerprint sensor, a pressure sensor, an iris sensor, a molecular sensor, a gyroscope, a barometer, a hygrometer, a thermometer, an infrared sensor, or the like. Details are not described herein.

The display unit 1806 is configured to display information entered by the user or information provided for the user. The display unit 1806 may include the display panel 18061, and the display panel 18061 may be configured in a form of a liquid crystal display (Liquid Crystal Display, LCD), an organic light-emitting diode (Organic Light-Emitting Diode, OLED), or the like.

The user input unit 1807 may be configured to receive entered numerical or character information, and generate key signal input that is related to user setting and function control of the terminal device. Specifically, the user input unit 1807 includes a touch panel 18071 and other input devices 18072. The touch panel 18071, also referred to as a touchscreen, may collect a touch operation performed by a user on or near the touch panel 18071 (for example, an operation performed by the user on the touch panel 18071 or near the touch panel 18071 by using a finger or any appropriate object or accessory such as a stylus). The touch panel 18071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information into contact coordinates, transmits the contact coordinates to the processor 1810, receives a command transmitted by the processor 1810, and executes the command. In addition, the touch panel 18071 may be implemented in a plurality of types, for example, a resistive type, a capacitive type, an infrared type, and a surface acoustic wave type. In addition to the touch panel 18071, the user input unit 1807 may further include the other input devices 18072. Specifically, the other input devices 18072 may include but are not limited to a physical keyboard, a function key (such as a volume control key or an on/off key), a trackball, a mouse, and a joystick. Details are not described herein.

Further, the touch panel 18071 may cover the display panel 18061. After detecting a touch operation on or near the touch panel 18071, the touch panel 18071 transmits the touch operation to the processor 1810 to determine a type of a touch event. Then the processor 1810 provides corresponding visual output on the display panel 18061 based on the type of the touch event. In FIG. 18, the touch panel 18071 and the display panel 18061 serve as two separate components to implement input and output functions of the terminal device. However, in some embodiments, the touch panel 18071 and the display panel 18061 may be integrated to implement the input and output functions of the terminal device. This is not specifically limited herein.

The interface unit 1808 is an interface for connecting an external apparatus to the terminal device 1800. For example, the external apparatus may include a wired or wireless headphone port, an external power supply (or battery charger) port, a wired or wireless data port, a memory card port, a port for connecting an apparatus with an identification module, an audio input/output (input/output, I/O) port, a video I/O port, a headset port, or the like. The interface unit 1808 may be configured to receive input (for example, data information and electric power) from the external apparatus, and transmit the received input to one or more elements in the terminal device 1800; or may be configured to transmit data between the terminal device 1800 and the external apparatus.

The memory 1809 may be configured to store software programs and various data. The memory 1809 may mainly include a program storage region and a data storage region. The program storage region may store an operating system, an application program required by at least one function (for example, an audio play function or an image play function), and the like. The data storage region may store data (for example, audio data or a phone book) created based on usage of the mobile phone. In addition, the memory 1809 may include a high-speed random access memory, or may include a nonvolatile memory, for example, at least one magnetic disk storage device or a flash memory device, or another volatile solid-state storage device.

The processor 1810 is a control center of the terminal device, uses various interfaces and lines to connect all parts of the entire terminal device, and performs various functions and data processing of the terminal device by running or executing the software program and/or module stored in the memory 1809 and invoking data stored in the memory 1809, thereby performing overall monitoring on the terminal device. The processor 1810 may include one or more processing units. Optionally, the processor 1810 may integrate an application processor and a modem processor. The application processor mainly processes an operating system, a user interface, an application program, and the like. The modem processor mainly processes wireless communication. It can be understood that the modem processor may be alternatively not integrated in the processor 1810.

The terminal device 1800 may further include the power supply 1811 (for example, a battery) that supplies power to each component. Optionally, the power supply 1811 may be logically connected to the processor 1810 by using a power management system, so as to implement functions such as charging management, discharging management, and power consumption management by using the power management system.

In addition, the terminal device 1800 includes some functional modules that are not illustrated. Details are not described herein.

Optionally, some embodiments of this disclosure further provide a terminal device, including a processor 1810, a memory 1809, and a computer program stored in the memory 1809 and capable of running on the processor 1810. When the computer program is executed by the processor 1810, the processes of the foregoing embodiments of the mapping methods are implemented, and the same technical effects can be achieved. To avoid repetition, details are not described herein again.

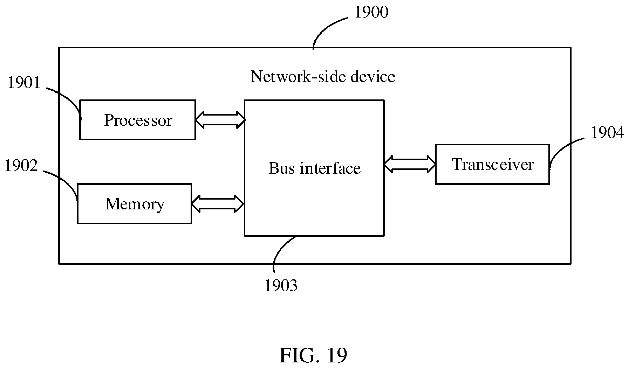

FIG. 19 is a structural diagram of a network-side device according to some embodiments of this disclosure. As shown in FIG. 19, the network-side device 1900 includes: a processor 1901, a memory 1902, a bus interface 1903, and a transceiver 1904, where the processor 1901, the memory 1902, and the transceiver 1904 are all connected to the bus interface 1903.

In some embodiments of this disclosure, the network-side device 1900 further includes a computer program stored in the memory 1902 and capable of running on the processor 1901.

In some embodiments of this disclosure, the transceiver 1904 is configured to receive a random access message based on a target mapping relationship between physical uplink shared channel PUSCH resources and synchronization signal block SSB-related resources.

The target mapping relationship is determined according to a preset mapping rule.

Optionally, the preset mapping rule includes at least one of the following:
a first mapping rule, where the first mapping rule is used to determine a mapping relationship between PUSCH resource units of physical uplink shared channel occasions PUOs and SSBs; and
a second mapping rule, where the second mapping rule is used to determine a mapping relationship between PUSCH resource units of PUOs and physical random access channel PRACH resource units corresponding to SSBs.

Optionally, the first mapping rule includes one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

Optionally, that PUSCH resource units of PUOs are mapped to PRACH resource units corresponding to SSBs according to a PRACH resource unit numbering order and an SSB numbering order includes:
PUSCH resource units of PUOs are mapped to PRACH resource units corresponding to I SSBs according to the PRACH resource unit numbering order, and mapped to N SSBs according to the SSB numbering order, where I and N are both positive integers and I is less than or equal to N.

Optionally, that PRACH resource units corresponding to SSBs are mapped to PUSCH resource units of PUOs according to a PUO numbering order and a PUSCH resource unit numbering order includes:
PRACH resource units corresponding to SSBs are mapped to PUSCH resource units of J PUOs according to the PUSCH resource unit numbering order, and mapped to M PUOs according to the PUO numbering order, where J and M are both positive integers and J is less than or equal to M.

Optionally, the second mapping rule includes:
SSBs are mapped to PUSCH resource units of PUOs according to a PUSCH resource unit numbering order and a PUO numbering order.

Optionally, that SSBs are mapped to PUSCH resource units of PUOs according to a PUSCH resource unit numbering order and a PUO numbering order includes:
SSBs are mapped to PUSCH resource units of one PUO according to the PUSCH resource unit numbering order, and mapped to P PUOs according to the PUO numbering order, where P is a positive integer.

Some embodiments of this disclosure further provide a computer-readable storage medium. The computer-readable storage medium stores a computer program. When the computer program is executed by a processor, the processes of the foregoing embodiments of the mapping methods are implemented, and the same technical effects can be achieved. To avoid repetition, details are not described herein again. For example, the computer-readable storage medium is a read-only memory (Read-Only Memory, ROM), a random access memory (Random Access Memory, RAM), a magnetic disk, an optical disk, or the like.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this disclosure essentially, or the part contributing to related technologies may be embodied in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

A person of ordinary skill in the art may be aware that, in combination with the examples described in the embodiments disclosed in this specification, units, algorithms, and steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this disclosure.

It can be clearly understood by a person skilled in the art that, for convenience and brevity of description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this disclosure may be integrated into one processing unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this disclosure essentially, or the part contributing to related technologies may be embodied in a form of a software product. The computer software product is stored in a storage medium, and includes instructions for enabling a computer device (which may be a personal computer, a server, a network device, or the like) to perform all or some of the steps of the methods described in the embodiments of this disclosure. The foregoing storage medium includes any medium that can store program code, such as a USB flash drive, a removable hard disk, a ROM, a RAM, a magnetic disk, or an optical disc.

A person of ordinary skill in the art can understand that all or some of the processes of the methods in the embodiments may be implemented by a computer program controlling relevant hardware. The program may be stored in a computer-readable storage medium. When the program runs, the processes of the methods in the embodiments are performed. The foregoing storage medium may be a magnetic disk, an optical disc, a read-only memory (Read-Only Memory, ROM), a random access memory (Random Access Memory, RAM), or the like.

It can be understood that the embodiments described in some embodiments of this disclosure may be implemented by hardware, software, firmware, middleware, microcode, or a combination thereof. For hardware implementation, a module, a unit, or a sub-unit may be implemented in one or more application-specific integrated circuits (Application Specific Integrated Circuits, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the techniques described in some embodiments of this disclosure may be implemented by modules (such as processes and functions) that perform the functions described in some embodiments of this disclosure. Software code may be stored in the memory and executed by the processor. The memory may be implemented in or outside the processor.

The foregoing describes the embodiments of this disclosure with reference to the accompanying drawings. However, this disclosure is not limited to the foregoing specific implementations. The foregoing specific implementations are merely illustrative rather than restrictive. As instructed by this disclosure, a person of ordinary skill in the art may develop many other manners without departing from principles of this disclosure and the protection scope of the claims, and all such manners fall within the protection scope of this disclosure.

## Claims

1. A mapping method, applied to a terminal device and comprising:
transmitting a random access message based on a target mapping relationship between physical uplink shared channel PUSCH resources and synchronization signal block SSB-related resources, wherein
the target mapping relationship is determined according to a preset mapping rule.

2. The method according to claim 1, wherein the preset mapping rule comprises at least one of the following:
a first mapping rule, wherein the first mapping rule is used to determine a mapping relationship between PUSCH resource units of physical uplink shared channel occasion PUOs and SSBs; and
a second mapping rule, wherein the second mapping rule is used to determine a mapping relationship between PUSCH resource units of PUOs and physical random access channel PRACH resource units corresponding to SSBs.

3. The method according to claim 2, wherein the first mapping rule comprises one of the following:
PUSCH resource units of PUOs are mapped to PRACH resource units corresponding to SSBs according to a PRACH resource unit numbering order and an SSB numbering order; or
PRACH resource units corresponding to SSBs are mapped to PUSCH resource units of PUOs according to a PUO numbering order and a PUSCH resource unit numbering order.

4. The method according to claim 3, wherein that PUSCH resource units of PUOs are mapped to PRACH resource units corresponding to SSBs according to a PRACH resource unit numbering order and an SSB numbering order comprises:
PUSCH resource units of PUOs are mapped to PRACH resource units corresponding to I SSBs according to the PRACH resource unit numbering order, and mapped to N SSBs according to the SSB numbering order, wherein I and N are both positive integers and I is less than or equal to N.

5. The method according to claim 3, wherein that PRACH resource units corresponding to SSBs are mapped to PUSCH resource units of PUOs according to a PUO numbering order and a PUSCH resource unit numbering order comprises:
PRACH resource units corresponding to SSBs are mapped to PUSCH resource units of J PUOs according to the PUSCH resource unit numbering order, and mapped to M PUOs according to the PUO numbering order, wherein J and M are both positive integers and J is less than or equal to M.

6. The method according to claim 2, wherein the second mapping rule comprises:
SSBs are mapped to PUSCH resource units of PUOs according to a PUSCH resource unit numbering order and a PUO numbering order.

7. The method according to claim 6, wherein that SSBs are mapped to PUSCH resource units of PUOs according to a PUSCH resource unit numbering order and a PUO numbering order comprises:
SSBs are mapped to PUSCH resource units of one PUO according to the PUSCH resource unit numbering order, and mapped to P PUOs according to the PUO numbering order, wherein P is a positive integer.

8. The method according to claim 2, wherein one PUCCH resource unit is associated with one SSB.

9. The method according to claim 2, wherein
PUSCH resource units and SSBs are mapped in an interlaced manner or non-interlaced manner;
or
PUSCH resource units and PRACH resource units corresponding to SSBs are mapped in an interlaced manner or non-interlaced manner.

10. The method according to claim 1, wherein before the transmitting a random access message based on a target mapping relationship between physical uplink shared channel PUSCH resources and synchronization signal block SSB-related resources, the method further comprises:
in a case that first configuration information exists, establishing the mapping relationship between PUSCH resource units of PUOs and SSBs according to a first mapping rule, wherein the first configuration information is used to indicate that PUSCH resource units are associated with PRACH resource units corresponding to SSBs; or
in other cases, establishing the mapping relationship between PUSCH resource units of PUOs and physical random access channel PRACH resource units corresponding to SSBs according to a second mapping rule.

11. The method according to claim 1, wherein a mapping parameter of the target mapping relationship is determined by configuration information, and the configuration information comprises at least one of the following:
an SSB parameter associated with one PUO, wherein the SSB parameter comprises a quantity of SSBs or a set of SSBs;
a quantity of PUSCH resource units of one PUO;
that Q PRACH resource units corresponding to one target SSB are associated with PUSCH resource units of PUO(s), wherein the target SSB is an SSB corresponding to the PUO(s), and Q is a positive integer;
a PUSCH resource unit mapping spacing L, wherein L is greater than or equal to 1;
an SSB mapping spacing V, wherein V is greater than or equal to 0;
a PUO parameter associated with one SSB, wherein the PUO parameter comprises at least one of the following: time domain resources of a PUO, frequency domain resources of a PUO, a quantity of PUOs, and PUO index(es);
a PRACH resource unit parameter associated with one PUSCH resource unit of one PUO, wherein the PRACH resource unit parameter comprises a quantity of PRACH resource units or a set of PRACH resource units;
SSB grouping information, wherein the SSB grouping information comprises at least one of an SSB grouping manner, a quantity of SSB groups, and a quantity of SSBs in each SSB group; and
a quantity of PUSCH resource units of one PUO that are associated with one SSB.

12. The method according to claim 11, wherein
in a case that L = 1, PUSCH resource units and SSBs are mapped in a non-interlaced manner, or PUSCH resource units and PRACH resource units corresponding to SSBs are mapped in a non-interlaced manner; or
in a case that L > 1, PUSCH resource units and SSBs are mapped in an interlaced manner, or PUSCH resource units and PRACH resource units corresponding to SSBs are mapped in an interlaced manner.

13. The method according to claim 1, wherein the PUSCH resource comprises at least one of the following:
a time domain resource of a PUSCH;
a frequency domain resource of a PUSCH;
a demodulation reference signal DMRS port;
a DMRS sequence;
a DMRS scrambling identifier; and
a PUSCH scrambling identifier.

14. A mapping method, applied to a network-side device and comprising:
receiving a random access message based on a target mapping relationship between physical uplink shared channel PUSCH resources and synchronization signal block SSB-related resources, wherein
the target mapping relationship is determined according to a preset mapping rule.

15. The method according to claim 14, wherein the preset mapping rule comprises at least one of the following:
a first mapping rule, wherein the first mapping rule is used to determine a mapping relationship between PUSCH resource units of physical uplink shared channel occasions PUOs and SSBs; and
a second mapping rule, wherein the second mapping rule is used to determine a mapping relationship between PUSCH resource units of PUOs and physical random access channel PRACH resource units corresponding to SSBs.

16. The method according to claim 15, wherein the first mapping rule comprises one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

17. The method according to claim 16, wherein that PUSCH resource units of PUOs are mapped to PRACH resource units corresponding to SSBs according to a PRACH resource unit numbering order and an SSB numbering order comprises:
PUSCH resource units of PUOs are mapped to PRACH resource units corresponding to I SSBs according to the PRACH resource unit numbering order, and mapped to N SSBs according to the SSB numbering order, wherein I and N are both positive integers and I is less than or equal to N.

18. The method according to claim 16, wherein that PRACH resource units corresponding to SSBs are mapped to PUSCH resource units of PUOs according to a PUO numbering order and a PUSCH resource unit numbering order comprises:
PRACH resource units corresponding to SSBs are mapped to PUSCH resource units of J PUOs according to the PUSCH resource unit numbering order, and mapped to M PUOs according to the PUO numbering order, wherein J and M are both positive integers and J is less than or equal to M.

19. The method according to claim 15, wherein the second mapping rule comprises:
SSBs are mapped to PUSCH resource units of PUOs according to a PUSCH resource unit numbering order and a PUO numbering order.

20. The method according to claim 19, wherein that SSBs are mapped to PUSCH resource units of PUOs according to a PUSCH resource unit numbering order and a PUO numbering order comprises:
SSBs are mapped to PUSCH resource units of one PUO according to the PUSCH resource unit numbering order, and mapped to P PUOs according to the PUO numbering order, wherein P is a positive integer.

21. A terminal device, comprising:
a transmitting module, configured to transmit a random access message based on a target mapping relationship between physical uplink shared channel PUSCH resources and synchronization signal block SSB-related resources, wherein
the target mapping relationship is determined according to a preset mapping rule.

22. The terminal device according to claim 21, wherein the preset mapping rule comprises at least one of the following:
a first mapping rule, wherein the first mapping rule is used to determine a mapping relationship between PUSCH resource units of physical uplink shared channel occasions PUOs and SSBs; and
a second mapping rule, wherein the second mapping rule is used to determine a mapping relationship between PUSCH resource units of PUOs and physical random access channel PRACH resource units corresponding to SSBs.

23. The terminal device according to claim 22, wherein the first mapping rule comprises one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

24. The terminal device according to claim 23, wherein that PUSCH resource units of PUOs are mapped to PRACH resource units corresponding to SSBs according to a PRACH resource unit numbering order and an SSB numbering order comprises:
PUSCH resource units of PUOs are mapped to PRACH resource units corresponding to I SSBs according to the PRACH resource unit numbering order, and mapped to N SSBs according to the SSB numbering order, wherein I and N are both positive integers and I is less than or equal to N.

25. The terminal device according to claim 23, wherein that PRACH resource units corresponding to SSBs are mapped to PUSCH resource units of PUOs according to a PUO numbering order and a PUSCH resource unit numbering order comprises:
PRACH resource units corresponding to SSBs are mapped to PUSCH resource units of J PUOs according to the PUSCH resource unit numbering order, and mapped to M PUOs according to the PUO numbering order, wherein J and M are both positive integers and J is less than or equal to M.

26. The terminal device according to claim 22, wherein the second mapping rule comprises:
SSBs are mapped to PUSCH resource units of PUOs according to a PUSCH resource unit numbering order and a PUO numbering order.

27. The terminal device according to claim 26, wherein that SSBs are mapped to PUSCH resource units of PUOs according to a PUSCH resource unit numbering order and a PUO numbering order comprises:
SSBs are mapped to PUSCH resource units of one PUO according to the PUSCH resource unit numbering order, and mapped to P PUOs according to the PUO numbering order, wherein P is a positive integer.

28. A network-side device, comprising:
a receiving module, configured to receive a random access message based on a target mapping relationship between physical uplink shared channel PUSCH resources and synchronization signal block SSB-related resources, wherein
the target mapping relationship is determined according to a preset mapping rule.

29. The network-side device according to claim 28, wherein the preset mapping rule comprises at least one of the following:
a first mapping rule, wherein the first mapping rule is used to determine a mapping relationship between PUSCH resource units of physical uplink shared channel occasions PUOs and SSBs; and
a second mapping rule, wherein the second mapping rule is used to determine a mapping relationship between PUSCH resource units of PUOs and physical random access channel PRACH resource units corresponding to SSBs.

30. The network-side device according to claim 29, wherein the first mapping rule comprises one of the following:
PUSCH resource units of PUOs are mapped to PRACH resource units corresponding to SSBs according to a PRACH resource unit numbering order and an SSB numbering order; and
PRACH resource units corresponding to SSBs are mapped to PUSCH resource units of PUOs according to a PUO numbering order and a PUSCH resource unit numbering order.

31. The network-side device according to claim 30, wherein that PUSCH resource units of PUOs are mapped to PRACH resource units corresponding to SSBs according to a PRACH resource unit numbering order and an SSB numbering order comprises:
PUSCH resource units of PUOs are mapped to PRACH resource units corresponding to I SSBs according to the PRACH resource unit numbering order, and mapped to N SSBs according to the SSB numbering order, wherein I and N are both positive integers and I is less than or equal to N.

32. The network-side device according to claim 30, wherein that PRACH resource units corresponding to SSBs are mapped to PUSCH resource units of PUOs according to a PUO numbering order and a PUSCH resource unit numbering order comprises:
PRACH resource units corresponding to SSBs are mapped to PUSCH resource units of J PUOs according to the PUSCH resource unit numbering order, and mapped to M PUOs according to the PUO numbering order, wherein J and M are both positive integers and J is less than or equal to M.

33. The network-side device according to claim 29, wherein the second mapping rule comprises:
SSBs are mapped to PUSCH resource units of PUOs according to a PUSCH resource unit numbering order and a PUO numbering order.

34. The network-side device according to claim 33, wherein that SSBs are mapped to PUSCH resource units of PUOs according to a PUSCH resource unit numbering order and a PUO numbering order comprises:
SSBs are mapped to PUSCH resource units of one PUO according to the PUSCH resource unit numbering order, and mapped to P PUOs according to the PUO numbering order, wherein P is a positive integer.

35. A terminal device, comprising a processor, a memory, and a computer program stored in the memory and capable of running on the processor, wherein when the computer program is executed by the processor, the steps of the mapping method according to any one of claims 1 to 13 are implemented.

36. A network-side device, comprising a processor, a memory, and a computer program stored in the memory and capable of running on the processor, wherein when the computer program is executed by the processor, the steps of the mapping method according to any one of claims 14 to 20 are implemented.

37. A computer-readable storage medium, wherein the computer-readable storage medium stores a computer program, and when the computer program is executed by a processor, the steps of the mapping method according to any one of claims 1 to 13 are implemented, or the steps of the mapping method according to any one of claims 14 to 20 are implemented.
